# EUROPEAN PATENT APPLICATION

(11) **EP 4 757 486 A1**
(43) Date of publication of application: **10.06.2026**
(21) Application number: 23947015.6
(22) Date of filing: 31.07.2023
(51) Int. Cl.: H04W 76/11

(54) **COMMUNICATION METHODS AND DEVICES**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: RGTH
(86) International application number: PCT/CN2023/110275
(87) International publication number: WO 2025/025066

(57) **Abstract**

The present application relates to communication methods, devices, a computer-readable storage medium, a computer program product and a computer program. A method comprises: a terminal receives a first message, wherein the first message carries a temporary identifier of a first user, and the first user is a user using the terminal.

## Description

### TECHNICAL FIELD

The present disclosure relates to the field of communications, and in particular, to a communication method and device, a computer-readable storage medium, a computer program product, and a computer program.

### BACKGROUND

With the development and popularization of electronic devices, there are many different forms of terminals for users to use. For the same terminal, different users require different services when accessing it. However, in related technologies, a terminal and a network side usually only provide services at a terminal granularity, and cannot distinguish which user is using the terminal. Therefore, how to manage and serve different users of the terminal becomes a problem that needs to be solved.

### SUMMARY

A communication method and device, a computer-readable storage medium, a computer program product, and a computer program are provided in the embodiments of the present disclosure.

A communication method is provided in the embodiments of the present disclosure, which includes:
receiving, by a terminal, a first message, where the first message carries a temporary identity of a first user, and the first user is a user using the terminal.

A communication method is provided in the embodiments of the present disclosure, which includes:
transmitting, by a first network device, a first message, where the first message carries a temporary identity of a first user, and the first user is a user using a terminal.

A communication method is provided in the embodiments of the present disclosure, which includes:
receiving, by a terminal, a fourth message, where the fourth message carries an identity of a first user, and the first user is a user using the terminal.

A communication method is provided in the embodiments of the present disclosure, which includes:
transmitting, by a first network device, a fourth message, wherein the fourth message carries an identity of a first user, and the first user is a user using a terminal.

A terminal is provided in the embodiments of the present disclosure, which includes:
a first communication unit, configured to receive a first message, where the first message carries a temporary identity of a first user, and the first user is a user using the terminal.

A first network device is provided in the embodiments of the present disclosure, which includes:
a second communication unit, configured to transmit a first message, where the first message carries a temporary identity of a first user, and the first user is a user using a terminal.

A terminal is provided in the embodiments of the present disclosure, which includes:
a first communication unit, configured to receive a fourth message, where the fourth message carries an identity of a first user, and the first user is a user using the terminal.

A first network device is provided in the embodiments of the present disclosure, which includes:
a second communication unit, configured to transmit a fourth message, where the fourth message carries an identity of a first user, and the first user is a user using a terminal.

A terminal is provided in the embodiments of the present disclosure, which includes: a transceiver, a processor and a memory. The memory is configured to store a computer program, the transceiver is configured to communicate with other devices, and the processor is configured to invoke and execute the computer program stored in the memory, so as to enable the terminal to perform the above-mentioned methods.

A first network device is provided in the embodiments of the present disclosure, which includes: a transceiver, a processor and a memory. The memory is configured to store a computer program, the transceiver is configured to communicate with other devices, and the processor is configured to invoke and execute the computer program stored in the memory, so as to enable the first network device to perform the above-mentioned methods.

A chip is provided in the embodiments of the present disclosure, which is configured to implement the above-mentioned methods.

Specifically, the chip includes: a processor, configured to invoke and execute a computer program from a memory, so as to enable a device equipped with the chip to perform the above-mentioned methods.

A computer-readable storage medium for storing a computer program is provided in the embodiments of the present disclosure, where in response to that the computer program is executed by a device, the device is enabled to perform the above-mentioned methods.

A computer program product is provided in the embodiments of the present disclosure, which includes computer program instructions, where a computer is enabled to perform the above-mentioned methods through the computer program instructions.

A computer program is provided in the embodiments of the present disclosure, and a computer is enabled to perform the above-mentioned methods through the computer program.

By adopting solutions provided in the embodiments, the terminal may receive the temporary identity of the first user carried in the first message. The first user is a user capable of using the terminal. In this way, the terminal and the network side may be made to identify each user based on the temporary identity of the user, and thus providing corresponding management and communication services for different users using the terminal.

### BRIEF DESCRIPTION OF THE DRAWINGS

FIG. 1 is a schematic diagram of an application scenario according to the embodiments of the present disclosure.
FIG. 2 is a schematic diagram of an architecture of a 5G-based network system.
FIG. 3 is a schematic diagram of scenarios in which a same user uses different electronic devices in different situations.
FIGs. 4a to 4c are schematic diagrams of various scenarios of relationships between different terminals and different users.
FIG. 5 is a schematic flowchart of a communication method according to an embodiment of the present disclosure.
FIG. 6 is a schematic flowchart of a communication method according to another embodiment of the present disclosure.
FIG. 7 is a schematic flowchart of a communication method according to yet another embodiment of the present disclosure.
FIG. 8 is a schematic flowchart of a communication method according to yet another embodiment of the present disclosure.
FIG. 9 is a schematic diagram of an allocation relationship between a permanent identity of a user and a temporary identity of the user, a valid time, and a valid region according to an embodiment of the present disclosure.
FIGs. 10 to 12 are various schematic flowcharts of communication methods according to an embodiment of the present disclosure.
FIG. 13 is a schematic block diagram of a terminal according to an embodiment of the present disclosure.
FIG. 14 is a schematic block diagram of a first network device according to an embodiment of the present disclosure.
FIG. 15 is a schematic block diagram of a communication device according to the embodiments of the present disclosure.
FIG. 16 is a schematic block diagram of a chip according to the embodiments of the present disclosure.
FIG. 17 is a schematic block diagram of a communication system according to the embodiments of the present disclosure.

### DETAILED DESCRIPTION

Technical solutions in the embodiments of the present disclosure will be described below in conjunction with accompanying drawings in the embodiments of the present disclosure.

The technical solutions of the embodiments of the present disclosure may be applied to various communication systems, such as a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a wireless local area network (WLAN), wireless fidelity (WiFi), a 5th-generation (5G) communication system, or other communication systems.

Generally speaking, a number of connections supported by a traditional communication system is limited and is easy to implement, however, with the development of the communication technology, the mobile communication system will not only support the traditional communication, but also support, for example, a device-to-device (D2D) communication, a machine-to -machine (M2M) communication, a machine-type communication (MTC), a vehicle-to-vehicle (V2V) communication, or a vehicle-to-everything (V2X) communication, etc., and the embodiments of the present disclosure may also be applied to these communication systems. In a possible implementation, the communication system in the embodiments of the present disclosure may be applied to a carrier aggregation (CA) scenario, or may be applied to a dual connectivity (DC) scenario, or may also be applied to a standalone (SA) network deployment scenario. In a possible implementation, the communication system in the embodiments of the present disclosure may be applied to an unlicensed spectrum, where the unlicensed spectrum may also be considered as a shared spectrum; or the communication system in the embodiments of the present disclosure may also be applied to a licensed spectrum, where the licensed spectrum may also be considered as an unshared spectrum.

Various embodiments are described in conjunction with network devices and terminal devices in the embodiments of the present disclosure, where a terminal device may also be referred to as a user equipment (UE), an access terminal, a user unit, a user station, a mobile station, a mobile console, a remote station, a remote terminal, a mobile device, a user terminal, a terminal, a wireless communication device, a user agent or a user apparatus, etc. The terminal device may be a station (STAION, ST) in the WLAN, may be a cellular phone, a cordless phone, a session initiation protocol (SIP) phone, a wireless local loop (WLL) station, or a personal digital processing (Personal Digital Assistant, PDA) device, a handheld device with a wireless communication function, a computing device or other processing devices connected to a wireless modem, a vehicle-mounted device, a wearable device, a terminal device in a next generation communication system such as in an NR network, or a terminal device in a public land mobile network (PLMN) network evolved in the future, etc. In the embodiments of the present disclosure, the terminal device may be deployed on land, which includes indoor or outdoor, in handheld, worn or vehicle-mounted; may also be deployed on water (e.g., on a ship, etc.); may also be deployed in the air (e.g., on an airplane, a balloon, a satellite, etc.). In the embodiments of the present disclosure, the terminal device may be a mobile phone, a pad, a computer with a wireless transceiving function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, etc. As an example but not a limitation, in the embodiments of the present disclosure, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes, for example, a smart watch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the application, the network device may be a device used for communicating with a mobile device. The network device may be an access point (AP) in the WLAN, a base station (e.g., base transceiver station, BTS) in the GSM or CDMA, may also be a base station (e.g., NodeB, NB) in the WCDMA, or may also be an evolutional base station (e.g., evolutional node B, eNB or eNodeB) in the LTE, or a relay station or an access point, or a vehicle-mounted device, a wearable device, and a network device or a base station (gNB) in an NR network, or a network device in the PLMN network evolved in the future or a network device in the NTN network, etc. As an example but not a limitation, in the embodiments of the present disclosure, the network device may have a mobile characteristic, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may also be a base station provided on land, water, and other places. In the embodiments of the present disclosure, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and the small cell here may include: a metro cell, a micro cell, a pico cell, a femto cell, etc., these small cells have characteristics of small coverage range and low transmission power, which are applicable for providing a data transmission service with high speed.

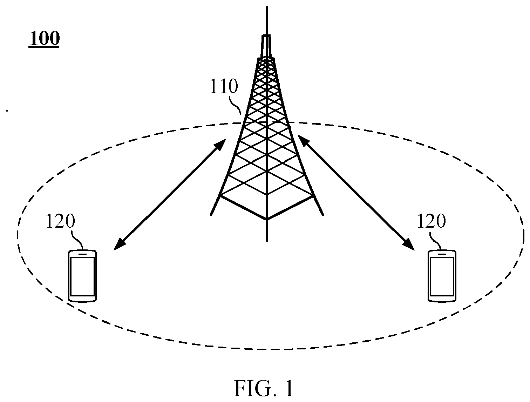

FIG. 1 exemplarily shows a communication system 100. The communication system includes one network device 110 and two terminal devices 120. In a possible implementation, the communication system 100 may include a plurality of network devices 110, and other numbers of terminal devices 120 may be included within a coverage range of each network device 110, which is not limited in the embodiments of the present disclosure. In a possible implementation, the communication system 100 may also include other network entities such as a mobility management entity (MME), and an access and mobility management function (AMF), etc., which is not limited by the embodiments of the present disclosure. Herein, the network device may also include an access network device and a core network device. That is, the wireless communication system also includes multiple core networks for communicating with the access network device. The access network device may be an evolutional base station (evolutional node B, referred to as eNB or e-NodeB for short), a macro base station, a micro base station (also referred to as a "small base station"), a pico base station, an access point (AP), a transmission point (TP) or a new generation base station (new generation Node B, gNodeB), etc., in a long-term evolution (LTE) system, a next-generation (mobile communication system) (next radio, NR) system or an authorized auxiliary access long-term evolution (LAA-LTE) system. It should be understood that in the embodiments of the present disclosure, a device with a communication function in the network/system may be referred to as a communication device. Taking the communication system shown in FIG. 1 as an example, the communication device may include a network device and a terminal device with the communication function. The network device and the terminal device may be specific devices in the embodiments of the present disclosure, which will not be repeated herein. The communication device may also include other devices in the communication system, such as a network controller, a mobility management entity, and other network entities, which is not limited by the embodiments of the present disclosure.

To facilitate the understanding of the embodiments of the present disclosure, basic processes and basic concepts involved in the embodiments of the present disclosure are briefly described below. It should be understood that the basic processes and basic concepts introduced below do not limit the embodiments of the present disclosure.

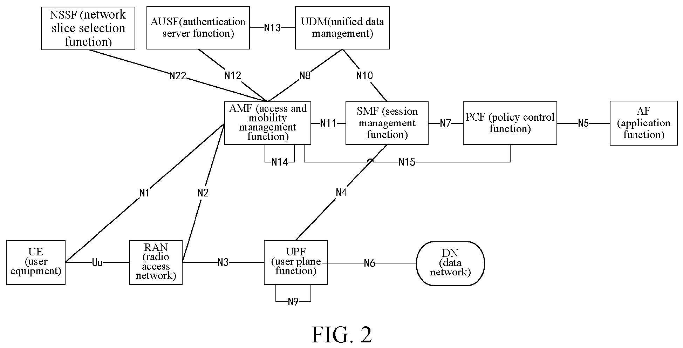

An architecture diagram of the 5G network system is shown in FIG. 2, and the 5G network system includes: NSSF (network slice selection function), which is mainly configured for management of network slice related information, such as selecting a network slice for a terminal device; AUSF (authentication server function), which is configured to complete an identity authentication function for user access; UDM (unified data management), which is configured to manage and store subscription data and authorization data; AMF (access and mobility management function), which is configured to complete mobility management, security anchor point and security UE policy management, etc., in addition to mobility management for UE, AMF being also responsible for forwarding session management related messages between UE and SMF; SMF (session management function), which is configured to complete session management, IP address allocation and management for UE, or the like; PCF (policy control function), which is responsible for formulating policies related to mobility management for UE, session management, billing, or the like; AF (application function), which is configured for external application servers; UPF (user plane function), which is configured for complex user-plane handling, such as forwarding traffic between radio access network and Internet, reporting traffic usage, and implementing QoS (quality of service) policies; and DN (data network), which refers to an external data network (e.g., Internet) for the 5GC. Data transmission is performed between various nodes of the 5GC (5G core network), between a user equipment (UE) and a node of the 5GC, between UE and radio access network (RAN), and between the RAN and a node of the 5GC via corresponding interfaces. For example, as shown in FIG. 2, in the 5GC, the data transmission is performed between AMF and NSSF via an interface N22; the data transmission is performed between AMF and SMF via an interface N11; the data transmission is performed between AMF and AUSF via an interface N12; the data transmission is performed between AMF and UDM via an interface N8. The data transmission is performed between SMF and UPF via an interface N4. The UPF performs the data transmission with the external data network via an interface N6, and performs the data transmission with AN via an interface N3. The UE performs an access stratum connection with AN via an interface Uu for access stratum message interaction and wireless data transmission; the UE performs a non-access stratum (NAS) connection with AMF via an interface N1 for NAS message interaction. The data transmission is performed between RAN and AMF via an interface N2; and the data transmission is performed between RAN and UPF via an interface N3. It should be understood that the above only describes the interfaces between a portion of nodes, and other interfaces between other 5GC nodes in FIG. 2 are not described in detail one by one.

Terminal identifiers used in a current system include at least one of: an SUPI (subscription permanent identifier), an SUCI (subscription concealed identifier), and a PEI (permanent equipment identifier). Herein, the globally unique 5G subscription permanent identifier (SUPI) shall be allocated to each subscriber in the 5G system, and provisioned in the UDM/UDR; the SUPI is only used inside the 3GPP system; the SUPI may contain at least one of: an IMSI (international mobile subscriber identity) as defined in TS 23.003[19], or a network-specific identifier, and the network-specific identifier is used for private networks as defined in TS 22.261[2]. A subscription concealed identifier (SUCI) is a privacy preserving identifier containing the concealed SUPI. In the scope of the current release, the only format supported for a PEI parameter is an international mobile equipment identity (IMEI).

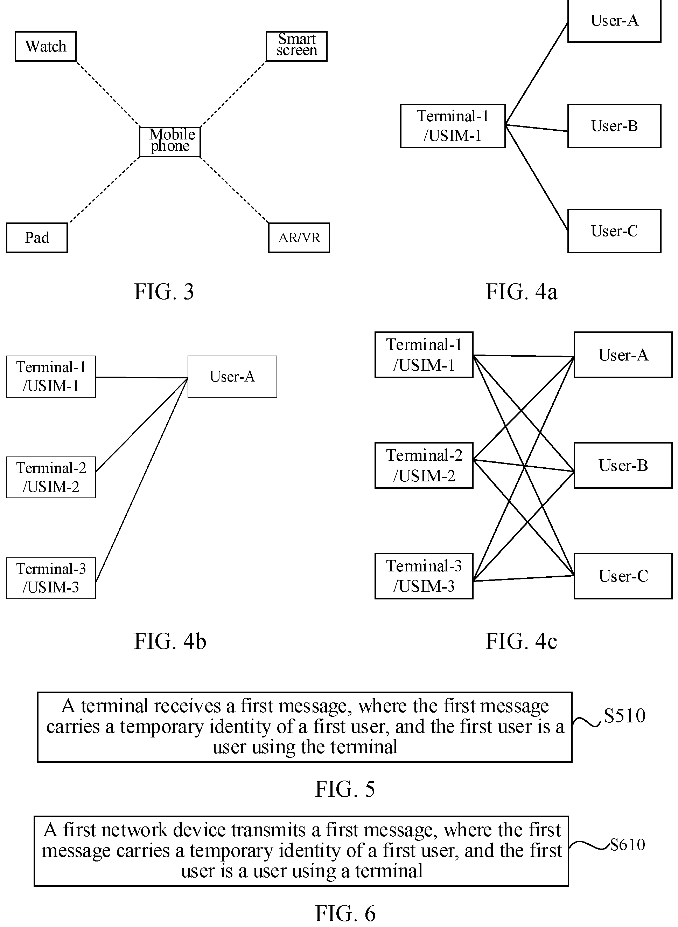

With the development and popularization of electronic devices, there are now many different forms of terminals for consumers to use, and various forms of terminals have respective advantages. For example, as shown in FIG. 3, a user may have a plurality of electronic devices at the same time, but different electronic devices may have different advantages and disadvantages. For example, in FIG. 3, a mobile phone may be a device that the user frequently uses, and its advantages are convenient input, powerful computing power, rich functions (including communication, multi-media, positioning, etc.), extremely high user stickiness, massive storage, and high privacy, its disadvantages are small screen, large weight and volume, and heavy workload; a smart screen has advantages such as high-definition resolution, large screen, fixed position, interaction using a remote control, and being a public equipment, its disadvantages are that they cannot be moved, interaction is inconvenient, and privacy is insufficient; a watch has the advantages of convenience, being wearable, portability, small screen, good for touching, physiological data detection, and being a private device, its disadvantages are that they are not suitable for complex interactions and complex content; advantages of a pad are good for touching effects and large screen size, but their disadvantages are large volume and weight, and they are not easy to carry around; the advantages of AR/VR are good for displaying effects and high privacy, but their disadvantages are low computing power and unstable wearing comfort.

With the development and popularization of electronic devices, there are now many different forms of terminals for consumers to use, and various forms of terminals have respective advantages. For example, as shown in FIG. 4a, a terminal-1 (with a USIM-1 inserted therein) may be shared by a plurality of users (user-A, user-B, and user-C in FIG. 4a); for example, as shown in FIG. 4b, a user-A may use a plurality of terminals (e.g., terminal-1 (using USIM-1), terminal-2 (using USIM-2), and terminal-3 (using USIM-3) in FIG. 4b); for example, as shown in FIG. 4c, a plurality of terminals (e.g., terminal-1 (using USIM-1), terminal-2 (using USIM-2), and terminal-3 (using USIM-3) in FIG. 4c) are respectively shared by a plurality of users (user-A, user-B, and user-C in FIG. 4c). For the same terminal, different users may require different services in a case of accessing. Currently, SUPI/IMSI-based identities are only distinguished at the granularity of terminal, but it is impossible to distinguish which user is using the terminal. To this end, it is necessary to define a user identity, which includes a permanent user identity and a temporary user identity; introduce new ID management network elements or enhance existing network elements to introduce user identity profiles; implement processes and methods of allocating and managing user identity on the network side; and implement processes and methods of the terminal requesting to allocate the user identity.

It should be understood that the terms "system" and "network" are often used interchangeably herein. The term "and/or" herein is just an association relationship that describes relevant objects, indicating that three relationships may exist. For example, A and/or B may mean these three situations where: A exists alone; A and B exist simultaneously; or B exists alone. In addition, a character "/" herein generally means that related objects before and after this character are in an "or" relationship. It should be understood that "indicate" and variations thereof mentioned in the embodiments of the present disclosure may mean a direct indication or an indirect indication, or represent that there is an association relationship between objects. For example, A indicating B may refers to that A directly indicates B, for example, B may be acquired through A; alternatively, A indicating B may refers to that A indirectly indicates B, for example, A indicates C, and B may be acquired through C; alternatively, A indicating B may refers to that there is an association relationship between A and B. In the description of the embodiments of the present disclosure, the term "correspond" and variations thereof may refer to that there is a direct or indirect correspondence between two objects, or may refer to that there is an association relationship between the two objects, or may also refer to a relationship of indicating and being indicated or a relationship of configuring and being configured, or the like.

To facilitate the understanding of the technical solutions of the embodiments of the present disclosure, the relevant technologies of the embodiments of the present disclosure are described below. The following relevant technologies as optional solutions may be arbitrarily combined with the technical solutions of the embodiments of the present disclosure, which all belong to the protection scope of the embodiments of the present disclosure.

FIG. 5 is a schematic flowchart of a communication method according to an embodiment of the present disclosure. The method includes at least portion of the following contents.

In S510, a terminal receives a first message, where the first message carries a temporary identity of a first user, and the first user is a user using the terminal.

FIG. 6 is a schematic flowchart of a communication method according to another embodiment of the present disclosure. The method includes at least portion of the following contents.

In S610, a first network device transmits a first message, where the first message carries a temporary identity of a first user, and the first user is a user using a terminal.

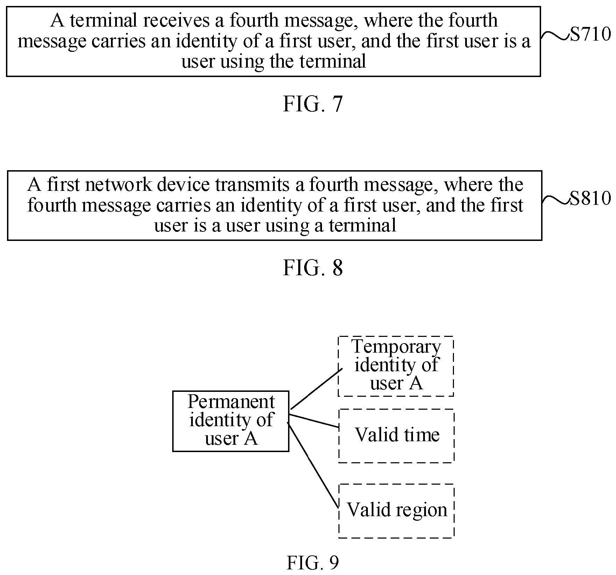

FIG. 7 is a schematic flowchart of a communication method according to yet another embodiment of the present disclosure. The method includes at least portion of the following contents.

In S710, a terminal receives a fourth message, where the fourth message carries an identity of a first user, and the first user is a user using the terminal.

FIG. 8 is a schematic flowchart of a communication method according to yet another embodiment of the present disclosure. The method includes at least portion of the following contents.

In S810, a first network device transmits a fourth message, where the fourth message carries an identity of a first user, and the first user is a user using a terminal.

Here, the first network device may be a first access network device or a first core network device. In an example, the first network device may be the first core network device. In this example, the first network device may include at least one of: an access and mobility management function (AMF), a unified data management (UDM) function, a unified data repository (UDR), or an identity management network element. The identity management network element may be a newly added network element of the core network. For example, the identity management network element may at least be capable of allocating user identities (and/or temporary identities) and/or storing user identities (and/or temporary identities). It should be understood that the above contents are only an exemplary description. In actual processing, the above-mentioned first network device is not limited to the network elements of the core network listed above, and all possible network elements for the first network device are not exhaustively listed herein.

The terminal may be a 3GPP terminal, that is, a terminal that is capable of accessing a 3GPP network to transmit and receive data. Exemplarily, the terminal may be a mobile phone, a watch, a tablet, a television, an augmented reality (AR)/virtual reality (VR) glasses, etc. Alternatively, the terminal may also be a non-3GPP terminal. All possible types of terminals are not exhaustively listed or limited in the present embodiment.

In some possible implementations, the first network device transmitting the first message refers to that: the first network device transmits the first message to the terminal. The terminal receiving the first message refers to that: the terminal receives the first message transmitted from the first network device.

In an embodiment, the first network device transmitting the first message may include that: in a case where the first network device determines that a trigger condition is met, the first network device transmits the first message to the terminal. The trigger condition may include at least one of: the terminal transmitting a request message for allocating the identity (ID) of the first user to the network side, or an authorization procedure for the identity (ID) of the first user being performed between the network side and the ID of the first user being determined.

In this embodiment, the first network device may allocate both the identity of the first user and the temporary identity of the first user. The first network device may be at least one of a UDM or a UDR.

In an embodiment, the first network device transmitting the first message may include that: the first network device receives the identity of the first user transmitted from a third network device, the first network device stores the identity of the first user, and generates a temporary identity of the first user; the first network device transmits the first message to the terminal.

In this embodiment, the third network device may allocate the identity of the first user, but does not allocate the temporary identity of the first user; the first network device is configured to allocate the temporary identity of the first user. In a case where a trigger condition is met, the third network device may transmit the identity of the first user to the first network device. The trigger condition is the same as that in the aforementioned embodiments, and will not be repeated herein.

In this embodiment, the first network device may be an identity management network element or the AMF, and the third network device may be at least one of a UDM or a UDR.

In an embodiment, the first message may be carried in at least one of: a second downlink NAS message, or a second downlink container.

Exemplarily, the first message may be carried in the second downlink NAS message.

For example, the first message may be carried in the second downlink NAS message transmitted from the first network device to the terminal. In this case, the first network device may be the AMF.

For example, the first network device may invoke a second network device to provide a specific service, transmit the first message to the second network device via an invoked service message, and the second network device may transmit the first message to the terminal via the second downlink NAS message carrying the first message. In this case, the first network device may be the identity management network element, and the second network device may be the AMF. Alternatively, the first network device may be at least one of the UDM or the UDR, and the second network device may be the AMF.

Exemplarily, the first message may be carried in the second downlink container. Furthermore, the first message may be carried in the second downlink container in the second downlink NAS message.

For example, the first message may be carried in the second downlink container in the second downlink NAS message transmitted from the first network device to the terminal. In this case, the first network device may be the AMF.

For example, the first network device may encapsulate the first message in the second downlink container and transmit it to the second network device, and the second network device may transmit the second downlink container to the terminal via the second downlink NAS message. In this case, the first network device may be the identity management network element, and the second network device may be the AMF. Alternatively, the first network device may be at least one of the UDM or the UDR, and the second network device may be an AMF.

In some possible implementations, the first message carries the temporary identity of the first user. The temporary identity of the first user is allocated by the first network device.

The temporary identity of the first user may be used to specifically identify a specific user using the terminal. The first user refers to a user currently using the terminal, and the first user refers to a specific person.

It should also be noted that the first message may carry a temporary identity of each of one or more users, and the one or more users may include the first user, that is, the first user may be any one of the one or more users. In other words, the network side (e.g., the first network device) may allocate or generate a temporary identity for each of the one or more users of the terminal, and transmit the temporary identity of each user to the terminal via the first message. Different users among the one or more users of the terminal refer to different specific people, and each of the one or more users of the terminal is a user who is capable of using the terminal, or is allowed to use the terminal, or may use the terminal, or is currently using the terminal. It should also be understood that since the processing related to the temporary identity of each user is the same as the processing related to the temporary identity of the first user, the following mainly uses the first user as an example for explanation. This does not mean that the solutions provided in this embodiment does not perform relevant processing on the temporary identities of other users. It is just for the sake of brevity that the processing related to the temporary identities of respective users are not described one by one.

The temporary identity of the first user includes at least one of: an identity of a region corresponding to the temporary identity of the first user, a relevant identity of a network device corresponding to the temporary identity of the first user, an identity of a network corresponding to the temporary identity of the first user, a temporary mobile subscriber identity (TMSI), an international mobile subscriber identity (IMSI), a globally unique temporary UE identity (GUTI), or a permanent equipment identifier (PEI).

Herein, the region may refer to a geographical range (or geographical region) composed of geographical locations. For example, the geographical range may be represented by one or more geographical coordinates of a geographical coordinate system.

An identity of a region is used to specifically indicate or represent a certain region. Specifically, the identity of the region may be at least one of a serial number, a code, a sequence number, etc., used to represent a region in a communication system. The identity of the region may be represented by a region ID. For example, a certain region is "City A", and the identity (such as a serial number) of City A in the communication system is "001"; or a certain region is "Region a1 within City A", and the identity (such as a sequence number) of Region a1 within City A in the communication system is "0012". These are only examples, and do not limit the identity of the region, nor do they exhaustively list all possible situations.

The region corresponding to the temporary identity of the first user may include at least one of: a region where the network device corresponding to the temporary identity of the first user is located; or a region where the temporary identity of the first user is valid.

The network device corresponding to the temporary identity of the first user may be: a network device that allocates the temporary identity of the first user, or a network device that stores the temporary identity of the first user. In this embodiment, the network device corresponding to the temporary identity of the first user may be the first network device.

The region where the network device corresponding to the temporary identity of the first user is located may refer to a geographical range (or geographical region) where the network device corresponding to the temporary identity of the first user is located. The identity of the region where the network device corresponding to the temporary identity of the first user is located may include at least one of: a serial number of the region where the network device corresponding to the temporary identity of the first user is located, a code of the region where the network device corresponding to the temporary identity of the first user is located, a sequence number of the region where the network device corresponding to the temporary identity of the first user is located, or the like.

The region where the temporary identity of the first user is valid may be: one or more regions where the temporary identity of the first user is valid, or one or more regions authorized to use the temporary identity of the first user. A number of regions where the temporary identity of the first user is valid is not limited in this embodiment. In a case where there are a plurality of regions where the temporary identity of the first user is valid, a relationship between the respective regions where the temporary identity of the first user is valid is not limited in this embodiment, for example, region A where the temporary identity of the first user is valid and region B where the temporary identity of the first user is valid may be adjacent or non-adjacent, both of which are within the protection scope of this embodiment.

The identity of the region where the temporary identity of the first user is valid may include at least one of: a serial number of the region where the temporary identity of the first user is valid, a code of the region where the temporary identity of the first user is valid, a sequence number of the region where the temporary identity of the first user is valid, or the like.

The relevant identity of the network device corresponding to the temporary identity of the first user includes at least one of: an identity of a set to which the network device corresponding to the temporary identity of the first user belongs; or an identity of the network device corresponding to the temporary identity of the first user.

The specific description of the network device corresponding to the temporary identity of the first user is the same as that in the aforementioned embodiments, and will not be repeated herein.

The identity of the set to which the network device corresponding to the temporary identity of the first user belongs may be represented as an NF set ID. In this embodiment, the network device corresponding to the temporary identity of the first user may be the first network device. Accordingly, the identity of the set to which the network device corresponding to the temporary identity of the first user belongs may refer to an identity of a set to which the first network device belongs.

Furthermore, a set corresponding to the set (NF set ID) to which the network device corresponding to the temporary identity of the first user belongs may include one or more network devices, and the one or more network devices in the set may be at least one of: the one or more network devices in the set all supporting to identify the temporary identity of the first user; the one or more network devices in the set all supporting to serve (or being capable of serving) the temporary identity of the first user; service parameters provided by the one or more network devices in the set to the first user remaining unchanged, where the service parameters may include at least one of a network slice, a QoS (Quality of Service), or the like. For example, one or more network devices in the set support the same network slice, and the network slice is a network slice corresponding to the first user. The one or more network devices in the set may include the aforementioned first network device.

The identity of the network device corresponding to the temporary identity of the first user may be represented as an NF pointer (flag or indication). In this embodiment, the network device corresponding to the temporary identity of the first user may be the first network device. Accordingly, the identity of the network device corresponding to the temporary identity of the first user refers to the identity of the first network device, for example, it may be an AMF ID, or it may be an ID of some other network element (e.g., the identity management network element), which are not exhaustively listed herein.

That is, the relevant identity of the network device corresponding to the temporary identity of the first user may be represented as an NF (network function) ID. The NF ID may be composed of NF set ID + NF Pointer, or the NF ID may include only the NF Pointer, or the NF ID may include only the NF set ID.

The network corresponding to the temporary identity of the first user may refer to an operator network corresponding to the temporary identity of the first user. The operator network corresponding to the temporary identity of the first user may refer to an operator network that allocates the temporary identity of the first user, or an operator network that stores the temporary identity of the first user.

The identity of the network corresponding to the temporary identity of the first user may include: a network ID corresponding to the temporary identity of the first user. Exemplarily, the operator network may be a PLMN (public land mobile network), and the identity of the operator network may be a PLMN ID; the PLMN ID may be composed of at least one of: a mobile country code (MCC), or a mobile network code (MNC).

The TMSI is the same as the TMSI in the GUTI (globally unique temporary UE identity), which may be used to identify a specific temporary identity of a UE and is allocated by the network side. There is no limitation on the specific allocation method.

The only format supported by the PEI is the international mobile equipment identity (IMEI). In some possible examples, the PEI may also be replaced by the IMEI.

Optionally, the temporary identity of the first user further includes: a code of the first user, where the code of the first user is allocated by a network device serving the terminal.

The network device serving the terminal may be the same as the first network device or may be different from the first network device, which is not limited in this embodiment. In a case where the network device serving the terminal is different from the first network device, the network device serving the terminal may transmit the code of the first user to the first network device, a manner of transmitting the code of the first user or a specific message carrying the code of the first user is not limited in this embodiment.

The code of the first user may be represented by any one of: a code of the first user, a number of the first user, a serial number of the first user, an index of the first user, or a unique ID. The representations are not exhaustively listed or limited herein. The specific manner of generating or allocating the code of the first user is not limited in this embodiment.

Composition of the temporary identity of the first user provided in this embodiment may be at least one of: PLMN ID + the code of the first user; PLMN ID + Region ID + the code of the first user; PLMN ID + NF ID + the code of the first user; PLMN ID + Region ID + NF ID + GUTI + the code of the first user; PLMN ID + Region ID + NF ID + TMSI +GUTI + the code of the first user; IMSI + the code of the first user; PEI + the code of the first user; IMSI + PEI + the code of the first user; TMSI + the code of the first user; TMSI + PEI + the code of the first user, or the like. It should be understood that these are merely exemplary descriptions, and do not limit the temporary identity of the first user, nor do they exhaustively list all possible components and manners of composition of the temporary identity of the first user.

In some possible implementations, on the terminal side and/or the first network device side, a valid time and/or valid region may further be obtained. The valid time and/or valid region may be used to determine whether the temporary identity of the first user is valid. That is, the valid time and/or valid region may be used to compose a first valid condition of the temporary identity of the first user.

The valid time is used to determine a time range in which the temporary identity of the first user is valid. That is, in a case of being within the valid time, the temporary identity of the first user is valid; in a case of not being within the valid time, the temporary identity of the first user is invalid.

Optionally, the valid time may be a valid duration, such as 1 hour, 5 hours, 30 minutes, or may be longer or shorter.

Optionally, the valid time may include one or more valid time periods. In this case, any valid time period may include a start moment and an end moment. For example, the valid time may include a valid time period, specifically from 0:00 on date A to 24:00 on date B. Whether date A and date B are the same or different is within the protection scope of this embodiment. For example, the valid time may include a plurality of valid time periods, and any two valid time periods do not overlap, for example, a valid time period 1 is from 9:00 to 10:00 on date A, and a valid time period 2 is from 9:00 to 10:00 every day from date A to date B.

The valid region may be used to determine a region or range in which the temporary identity of the first user is valid. That is, in a case where the terminal is located within the valid region, the temporary identity of the first user is valid; in a case where the terminal is not located within the valid region, the temporary identity of the first user is invalid.

Optionally, the valid region may be represented by one or more coordinate values in the geographic coordinate system. For example, the valid region may be represented by a center point coordinate value and a region radius; for another example, the valid region may be represented by four corner point coordinate values, etc. The representation manners of the valid region are not limited or exhaustively listed herein.

Optionally, the valid region may be represented by a region identity within the communication system. For example, the valid region may include one or more cells, and accordingly, the valid region may be represented by each cell identity (Cell ID) of one or more cells; or the valid region may include one or more tracking areas, and accordingly, the valid region may be represented by each tracking area identity (TAI) of the one or more tracking areas.

In an embodiment, in addition to allocating the temporary identity of the first user, the first network device may also allocate the valid time and/or valid region. Correspondingly, the first message further carries at least one of: the valid time, or the valid region. The manner of the first network device generating or allocating the valid time and/or valid region is not limited in this embodiment.

In an embodiment, on the terminal side, the valid time is pre-configured, and/or the valid region is pre-configured. Correspondingly, on the first network device side, the valid time is pre-configured, and/or the valid region is pre-configured. It should be noted that the same valid time needs to be pre-configured on both the terminal side and the first network device side, and/or the same valid region needs to be pre-configured on both the terminal side and the first network device side.

In some possible implementations, after the terminal receives the first message, the method may further include that: the terminal transmits a first reply message, where the first reply message is used to indicate that the first message is successfully received. Correspondingly, after the first network device transmits the first message, the method may further include that: the first network device receives the first reply message.

Specifically, the terminal transmitting the first reply message may refer to that: the terminal transmits the first reply message to the first network device. The first network device receiving the first reply message may refer to that: the first network device receives the first reply message transmitted from the terminal.

Exemplarily, the first reply message may be carried in a third uplink NAS message.

For example, the first reply message may be carried in a third uplink NAS message transmitted from the terminal to the first network device. In this case, the first network device may be the AMF.

For example, the first reply message may be carried in the third uplink NAS message transmitted from the terminal to the second network device, and the second network device may transmit the first reply message to the first network device. In this case, the first network device may be the identity management network element, and the second network device may be the AMF. Alternatively, the first network device may be at least one of the UDM or the UDR, and the second network device may be the AMF.

In some possible implementations, after the terminal receives the first message, the method further includes that: in response to that the temporary identity of the first user does not meet a first valid condition, the terminal performs at least one operation of: stopping all or a portion of communication services corresponding to the temporary identity of the first user; or transmitting a second message, where the second message is used to determine at least one of: the temporary identity of the first user being invalid, a relevant identity of the first user being to be updated, or the temporary identity of the first user not meeting the first valid condition.

Herein, the first valid condition includes at least one of: the temporary identity of the first user being within a valid time; the terminal being located within a valid region; the terminal being located within a region where the temporary identity of the first user is valid; or there being no other relevant identity that needs to be updated for the terminal.

In an example, the valid time is a valid duration. The manner of the terminal determining whether the temporary identity of the first user is within the valid time may include that: the terminal initiates a first timer from a first moment; the terminal continuously determines whether a timing duration of the first timer is within the valid duration; if the timing duration of the first timer is within the valid duration, it is determined that the temporary identity of the first user is within the valid time; otherwise, it is determined that the temporary identity of the first user is not within the valid time.

Herein, the first moment is equal to a moment upon the terminal receiving the first message. Alternatively, the first moment may be equal to a moment upon the terminal transmitting the first reply message. Alternatively, the first moment may be later than the moment upon the terminal receiving the first message or later than the moment upon the terminal transmitting the first reply message. The length of the first moment later than the moment upon the terminal receiving the first message (or later than the moment upon the terminal transmitting the first reply message) may be configured according to actual conditions. For example, the first moment may be 1 second later than the moment upon the terminal receiving the first message, or the first moment may be 5 seconds later than the moment upon the terminal receiving the first message, or the like, which is not exhaustively listed or limited herein. Here, all possible situations of the first moment are not exhaustively listed. As long as the first moment is not earlier than the moment upon the terminal receiving the first message, all situations are within the protection scope of this embodiment.

In an example, the valid time is a valid time period. The manner of the terminal determining whether the temporary identity of the first user is within the valid time may include that: the terminal determines that the temporary identity of the first user is valid at the start moment of the valid time period, and continuously determines whether a current moment is equal to or later than the end moment of the valid time period; if the current moment is not the end moment of the valid time period, it is determined that the temporary identity of the first user is within the valid time; if the current moment is equal to or later than the end moment of the valid time period, it is determined that the temporary identity of the first user is not within the valid time.

Alternatively, the valid time includes the plurality of valid time periods. The manner of the terminal determining whether the temporary identity of the first user is within the valid time may include that: if the current moment is within any valid time period, the terminal determines that the temporary identity of the first user is within the valid time; if the current moment is not within any valid time period, and the current moment is equal to or later than the end moment of the last valid time period among all valid time periods, then it is determined that the temporary identity of the first user is not within the valid time.

In an example, the terminal determining whether it is located within the valid region may refer to that: the terminal obtains a current location and determines whether the current location is located within the valid region.

In an example, the other relevant identities may refer to at least one identity stored by the terminal that needs to be updated. For example, other relevant identities may include a GUTI. All possible types of other relevant identities are not exhaustively listed and limited herein. The manner of the terminal determining whether there are other relevant identities that need to be updated may be: determining whether the current moment is an update moment of other relevant identities based on configuration of other relevant identities. If so, it is determined that there are other relevant identities that need to be updated. Otherwise, it is determined that there is no other relevant identity that needs to be updated for the terminal.

In an example, the region where the temporary identity of the first user is valid may be determined based on an identity of the region of the temporary identity of the first user in the temporary identity of the first user. For example, in a case where at least portion of bits in the temporary identity of the first user include an identity of the region where the temporary identity of the first user is capable of being used, the terminal determines the region where the temporary identity of the first user is capable of being used based on the identity of the region where the temporary identity of the first user is capable of being used. The terminal may determine whether it is currently located within the region where the temporary identity of the first user is capable of being used by: acquiring a location of the terminal itself, and determining whether the location is located within the region where the temporary identity of the first user is capable of being used.

Herein, the region where the temporary identity of the first user is capable of being used and the valid region may be completely the same, partially the same, or completely different. If the region where the temporary identity of the first user is capable of being used is partially the same as the valid region, the valid region may be a portion of the region where the temporary identity of the first user is capable of being used.

The specific contents used for the first valid condition may be related to whether the first message carries the valid region and/or valid time, or whether the terminal is pre-configured with the valid region and/or valid time, etc., which will be illustrated by examples below.

In an embodiment, the first message carries the valid time, or the terminal and the first network device are pre-configured with the valid time.

In this case, the first valid condition may include the temporary identity of the first user being within the valid time.

Alternatively, the first valid condition may include: the temporary identity of the first user being within the valid time, and there being no other relevant identity that needs to be updated for the terminal.

Alternatively, the first valid condition may include: the temporary identity of the first user being within the valid time, and the terminal being located in the region where the temporary identity of the first user is capable of being used.

Alternatively, the first valid condition may include: the temporary identity of the first user being within the valid time, the terminal being located within the region where the temporary identity of the first user is capable of being used, and there being no other relevant identity that needs to be updated for the terminal.

In an embodiment, the first message carries the valid region, or the terminal and the first network device are pre-configured with the valid region.

In this case, the first valid condition may include the terminal being located within the valid region. Alternatively, the first valid condition may include: the terminal being located within the valid region, and there being no other relevant identity that needs to be updated for the terminal.

In an embodiment, the first message carries the valid time and the valid region, or the terminal and the first network device are pre-configured with the valid time.

In this case, the first valid condition may include: the temporary identity of the first user being within the valid time, and the terminal being located within the valid region. Alternatively, the first valid condition may include: the temporary identity of the first user being within the valid time, the terminal being located within the valid region, and there being no other relevant identity that needs to be updated for the terminal.

In an embodiment, the first message does not carry the valid time and valid region, and the terminal and the first network device are not configured with the valid time and valid region.

In this case, the first valid condition may include: the terminal being located within the region where the temporary identity of the first user is capable of being used. Alternatively, the first valid condition may include: the terminal being located within the region where the temporary identity of the first user is capable of being used, and there being no other relevant identity that needs to be updated for the terminal. Alternatively, the first valid condition may include: there being no other relevant identity that needs to be updated for the terminal.

It should be understood that the above contents are only illustrative descriptions of the possible combinations of the first valid condition. In actual processing, the first valid condition includes, but not limited to the above combinations. In this embodiment, all possible combinations are not exhaustively listed, nor are all possible contents that may be included in the first valid condition exhaustively listed or limited.

Stopping all or a portion of communication services corresponding to the temporary identity of the first user may include at least one of: the terminal stopping transmission for all or a portion of control plane (CP) messages (or control plane signaling) corresponding to the temporary identity of the first user, the terminal stopping transmission for all or a portion of user plane (UP) data corresponding to the temporary identity of the first user, the terminal suspending or deactivating a PDU session corresponding to the temporary identity of the first user, the terminal deactivating the context corresponding to the temporary identity of the first user stored in the UE, or the like. Here, situations of the terminal stopping all or a portion of communication services corresponding to the temporary identity of the first user are not exhaustively listed or limited.

Optionally, the second message may carry an explicitly first indication, and the first indication may be used to indicate at least one of: the temporary identity of the first user being invalid, a relevant identity of the first user being to be updated, or the temporary identity of the first user not meeting the first valid condition.

The first indication may only indicate any one of: the temporary identity of the first user being invalid, the relevant identity of the first user being to be updated, or a valid condition corresponding to the temporary identity of the first user being not met; alternatively, the first indication may indicate two or more of: the temporary identity of the first user being invalid, the relevant identity of the first user being to be updated, or the temporary identity of the first user not meeting the first valid condition, which is not limited in this embodiment.

The above-mentioned first indication may occupy one or more designated fields in the second message; for example, a first designated field in the second message may be used to indicate that the temporary identity of the first user is invalid, a second designated field of the second message may be used to indicate or request to update the relevant identity of the first user, and a third designated field of the second message may be used to indicate that the valid condition corresponding to the temporary identity of the first user is not met. The specific indication manners of various designated fields may be based on specific description contents or may be indicated by carrying a designated value, all of which are within the protection scope of this embodiment, and are not exhaustively listed or limited herein.

It should be understood that the carrying manner and specific contents of the above-mentioned first indication in the second message are only exemplary illustrations. In actual processing, as long as there is at least one bit or at least one content in the second message for indicating at least one of: the temporary identity of the first user being invalid, the relevant identity of the first user being to be updated, or the temporary identity of the first user not meeting the first valid condition, it is within the protection scope of this embodiment, and various possible forms are not limited or exhaustively listed herein.

Optionally, the second message may implicitly indicate at least one of: the temporary identity of the first user being invalid, a relevant identity of the first user being to be updated, or the temporary identity of the first user not meeting the first valid condition.

In an example, the second message may carry the temporary identity of the first user. In this case, the second message may not carry any content other than the temporary identity of the first user, so that the first network device may determine at least one of: the temporary identity of the first user being invalid, the relevant identity of the first user being to be updated, or the valid condition corresponding to the temporary identity of the first user being not met.

In an example, the second message may not carry any new content. As long as the terminal transmits a signal in an agreed format or an agreed message (e.g., a registration request message), the first network device may determine that the second message is used to indicate at least one of: the temporary identity of the first user being invalid, the relevant identity of the first user being to be updated, or the valid condition corresponding to the temporary identity of the first user being not met. Here, the second message not carrying any new content may refer to that the second message may be any uplink message specified in the relevant protocols, and the second message may not carry any content other than the contents that the uplink message needs to carry or may carry as specified in the relevant protocols. In a possible example, the second message may be a registration request message. In this example, the second message does not carry any other content other than the contents required to be carried in the registration request message corresponding to the relevant protocols. The above is only an exemplary illustration. The second message may be which uplink message in the relevant protocol, and may be negotiated, pre-configured, or pre-determined between both the terminal and the network side (e.g., the first network device). As long as the first network device, in a case of receiving the uplink message in the relevant protocols, may determine at least one of: the temporary identity of the first user being invalid, the relevant identity of the first user being to be updated, or the valid condition corresponding to the temporary identity of the first user being not met, it is within the protection scope of this embodiment, and is not exhaustively listed or limited herein.

The second message is carried in at least one of: a first uplink NAS message, or a first uplink container.

For example, the second message may be carried in a first uplink NAS message transmitted from the terminal to the first network device. In this case, the first network device may be the AMF.

For example, the second message may be carried in the first uplink container in the first uplink NAS message transmitted from the terminal to the second network device, and the second network device may transmit the first uplink container to the first network device. In this case, the first network device may be the identity management network element, and the second network device may be the AMF. Alternatively, the first network device may be at least one of the UDM or the UDR, and the second network device may be the AMF.

For example, the second message may be carried in a first uplink NAS message transmitted from the terminal to the second network device, and the second network device may extract the second message carried in the first reported NAS message and transmit it to the first network device. In this case, the first network device may be the identity management network element, and the second network device may be the AMF. Alternatively, the first network device may be at least one of the UDM or the UDR, and the second network device may be the AMF.

In some possible implementations, after the first network device transmits the first message, the method further includes that: the first network device receives a second message, where the second message is used to determine at least one of: the temporary identity of the first user being invalid, a relevant identity of the first user being to be updated, or the temporary identity of the first user not meeting a first valid condition; the first network device performs at least one operation of: stopping a portion or all of communication services corresponding to the temporary identity of the first user; or transmitting a third message.

Optionally, the second message may be an implicit indication, in this case, the second message may carry the temporary identity of the first user.

In a case where the first network device receives the second message, the first network device may determine that the temporary identity of the first user is invalid and/or the temporary identity of the first user does not meet the first valid condition; accordingly, the first network device may perform the processing of stopping a portion or all of communication services corresponding to the temporary identity of the first user.

Alternatively, in a case where the first network device receives the second message, the first network device may determine that the temporary identity of the first user is invalid, the temporary identity of the first user does not meet the first valid condition, and the relevant identity of the first user needs to be updated; accordingly, the first network device may perform the processing of stopping a portion or all of communication services corresponding to the temporary identity of the first user, and transmitting the third message.

Alternatively, in a case where the first network device receives the second message, the first network device may determine that the temporary identity of the first user is invalid, the temporary identity of the first user does not meet the first valid condition, and the relevant identity of the first user needs to be updated; accordingly, the first network device may transmit the third message.

Optionally, the second message may be an explicitly indication. In a case where the first network device receives the second message, the first network device may determine, based on the first indication in the second message, that the terminal indicates at least one of: the temporary identity of the first user being invalid, the relevant identity of the first user being to be updated, or the temporary identity of the first user not meeting the first valid condition.

In a case where the first network device determines that the terminal indicates that the temporary identity of the first user is invalid and/or the temporary identity of the first user does not meet the first valid condition, the first network device may perform the processing of stopping a portion or all of communication services corresponding to the temporary identity of the first user.

Alternatively, in a case where the first network device determines that the terminal indicates to update the relevant identity of the first user, the first network device may perform the processing of transmitting the third message.

Alternatively, in a case where the first network device determines that the terminal indicates that the temporary identity of the first user is invalid, the relevant identity of the first user is to be updated, or the temporary identity of the first user does not meet the first valid condition, the first network device may perform the processing of stopping a portion or all of communication services corresponding to the temporary identity of the first user, and perform the processing of transmitting the third message.

Stopping all or a portion of communication services corresponding to the temporary identity of the first user may include at least one of: the first network device stopping transmission for all or a portion of CP messages (or CP signaling) corresponding to the temporary identity of the first user, the first network device stopping transmission for all or a portion of UP data corresponding to the temporary identity of the first user, the first network device suspending or deactivating the PDU session corresponding to the temporary identity of the first user, the first network device deactivating the context corresponding to the temporary identity of the first user, or the like.

It should be pointed out that the first network device may be a portion of devices in the core network of the system. Therefore, the first network device stopping the transmission for all or a portion of the CP messages (or CP signaling) corresponding to the temporary identity of the first user may further include that: the first network device notifies various network elements serving the first user to stop the transmission for all or a portion of the CP messages (or CP signaling) corresponding to the temporary identity of the first user.

The first network device stopping the transmission for all or a portion of the UP data corresponding to the temporary identity of the first user may further include that: the first network device notifies various network elements serving the first user to stop the transmission for all or a portion of the UP data corresponding to the temporary identity of the first user.

The first network device suspending or deactivating the PDU session corresponding to the temporary identity of the first user may further include that: the first network device notifies various network elements serving the first user to suspend or deactivate the PDU session corresponding to the temporary identity of the first user.

The first network device deactivating the context corresponding to the temporary identity of the first user may include that: the first network device notifies a network element storing the context corresponding to the temporary identity of the first user to deactivate the context corresponding to the temporary identity of the first user.

Here, situations of the first network device stopping all or a portion of communication services corresponding to the temporary identity of the first user device are not exhaustively listed or limited.

Transmitting the third message may refer to that: the first network device transmits the third message to the terminal.

The third message carries at least one of: an updated temporary identity of the first user, an updated valid time, an updated valid region, or an identity of the first user.

Optionally, the third message may only carry the updated temporary identity of the first user.

In this case, the first network device may re-allocate or generate a new temporary identity for the first user. The manner of the first network device re-allocating the new temporary identity is not limited in this embodiment.

The updated valid time corresponding to the updated temporary identity of the first user may be pre-configured; and/or the updated valid region corresponding to the updated temporary identity of the first user may also be pre-configured.

The pre-configuration manners of the updated valid time and the updated valid region are not limited in this embodiment, as long as these manners for the terminal and the first network device are the same, they are within the protection scope of this embodiment.

Optionally, the third message may carry the updated temporary identity of the first user. Furthermore, the third message may further carry at least one of the updated valid time or the updated valid region. The allocation manners for the updated valid time and the updated valid region are not limited in this embodiment.

Optionally, the third message may only carry the identity of the first user. The identity of the first user is a unique identity of the first user that remains unchanged in the network or system. The identity of the first user may also be referred to as a permanent identity of the first user.

The identity of the first user includes at least one of: a code of the first user, a name of the first user, an identity of a network corresponding to the identity of the first user, an IMSI, a GUTI, or a PEI.

Optionally, the third message may carry the identity of the first user. Additionally, the third message may carry at least one of the updated valid time or the updated valid region. In this case, at least one of the updated valid time or the updated valid region may be contents used to construct the valid service condition corresponding to the identity of the first user, which will not be described in detail herein.

The third message is carried in at least one of: a first downlink NAS message, or a first downlink container.

Exemplarily, the third message may be carried in the first downlink NAS message.

For example, the third message may be carried in the first downlink NAS message transmitted from the first network device to the terminal. In this case, the first network device may be the AMF.

For example, the first network device may invoke a second network device to provide a specific service, transmit the third message to the second network device via an invoked service message, and the second network device may transmit the first message to the terminal via the first downlink NAS message carrying the first message. In this case, the first network device may be the identity management network element, and the second network device may be the AMF. Alternatively, the first network device may be at least one of the UDM or the UDR, and the second network device may be the AMF.

Exemplarily, the third message may be carried in the first downlink container. Furthermore, the third message may be carried in the first downlink container in the first downlink NAS message.

For example, the third message may be carried in the first downlink container in the first downlink NAS message transmitted from the first network device to the terminal. In this case, the first network device may be the AMF.

For example, the first network device may encapsulate the third message in the first downlink container, and transmit it to the second network device, and the second network device may transmit the first downlink container to the terminal via the first downlink NAS message. In this case, the first network device may be the identity management network element, and the second network device may be the AMF. Alternatively, the first network device may be at least one of the UDM or the UDR, and the second network device may be the AMF.

In some possible implementations, after the first network device transmits the first message, the method may include that: in response to that the temporary identity of the first user does not meet a second valid condition, the first network device performs at least one operation of: stopping a portion or all of communication services corresponding to the temporary identity of the first user; or transmitting the third message.

The second valid condition includes at least one of: the temporary identity of the first user being within a valid time; the terminal being located within a valid region; or the terminal being located within the region where the temporary identity of the first user is used.

In an example, the valid time is a valid duration. In this example, the manner of the first network device determining whether the temporary identity of the first user is within the valid time may include that: the first network device initiates a second timer from a second moment; the first network device continuously determines whether a timing duration of the second timer is within the valid duration; if the timing duration of the second timer is within the valid duration, it is determined that the temporary identity of the first user is within the valid time; otherwise, it is determined that the temporary identity of the first user is not within the valid time.

Herein, the second moment may be equal to a moment upon the first network device generating the temporary identity of the first user. Alternatively, the second time may be equal to a moment upon the first network device transmitting the first message. Alternatively, the second time may be equal to a moment upon the first network device receiving the first reply message. Here, all possible situations of the second moment are not exhaustively listed. As long as the second moment is not earlier than the moment upon the first network device generating the temporary identity of the first user, all situations are within the protection scope of this embodiment.

In an example, the valid time is one valid time period or a plurality of valid time periods. In this example, the manner of the first network device determining whether the temporary identity of the first user is within the valid time is the same as the manner of the terminal determining whether the temporary identity of the first user is within the valid time, and will not be repeated herein.

In an example, the first network device determining whether the terminal is located within the valid region may refer to that: the first network device obtains a current location of the terminal, and determines whether the current location of the terminal is located within the valid region.

In an example, the manner of the first network device determining whether the terminal is located within the region where the temporary identity of the first user is valid may be that: the first network device obtains the current location of the terminal and determines whether the current location of the terminal is located within the region where the temporary identity of the first user is valid.

The specific contents used in the second valid condition may be related to whether the first network device allocates the valid region and/or valid time and the valid region and/or valid time are carried via the first message, or whether the first network device is pre-configured with the valid region and/or valid time, etc., which will be illustrated below by examples.

In an embodiment, the first message carries the valid time, or the terminal and the first network device are pre-configured with the valid time.

In this case, the second valid condition may include the temporary identity of the first user being within the valid time. Alternatively, the second valid condition may include: the temporary identity of the first user being within the valid time, and the terminal being located in the region where the temporary identity of the first user is valid.

In an embodiment, the first message carries the valid region, or the terminal and the first network device are pre-configured with the valid region. In this case, the second valid condition may include the terminal being located within the valid region.

In an embodiment, the first message carries the valid time and the valid region, or the terminal and the first network device are pre-configured with the valid time. In this case, the second valid condition may include: the temporary identity of the first user being within the valid time, and the terminal being located within the valid region.

In an embodiment, the first message does not carry the valid time and valid region, and the terminal and the first network device are not configured with the valid time and valid region. In this case, the second valid condition may include: the terminal being located within the region where the temporary identity of the first user is valid.

It should be understood that the above contents are only illustrative descriptions of the possible combinations of the second valid condition. In actual processing, the second valid condition includes, but not limited to the above combinations. In this embodiment, all possible combinations are not exhaustively listed, nor are all possible contents that may be included in the second valid condition exhaustively listed or limited.

In this implementation, the first network device may determine by itself whether the temporary identity of the first user on the terminal side is valid, and then the first network device directly performs corresponding processing. Further, in a case where the first network device determines that the temporary identity of the first user does not meet the second valid condition, the first network device may only perform the operation of stopping a portion or all of communication services corresponding to the temporary identity of the first user, or the first network device may only perform the operation of transmitting the third message. Alternatively, the first network device may stop a portion or all of communication services corresponding to the temporary identity of the first user, and transmit the third message. The specific processing performed by the first network device may be determined based on a pre-configured policy, which is not limited herein.

It should be pointed out that this embodiment may be combined with the processing of the first network device receiving the second message. For example, the first network device may continue to determine whether the temporary identity of the first user meets the second valid condition without receiving the second message transmitted from the terminal. In a case where it is determined that the temporary identity of the first user does not meet the second valid condition, the first network device performs at least one operation of: stopping a portion or all of communication services corresponding to the temporary identity of the first user, or transmitting the third message.

For another example, in a case where the first network device does not determine that the temporary identity of the first user does not meet the second valid condition by itself, and receives the second message from the terminal, the first network device may, based on the second message, determine at least one of: the temporary identity of the first user being invalid, a relevant identity of the first user being to be updated, or the temporary identity of the first user not meeting the first valid condition; and perform at least one operation of: stopping a portion or all of communication services corresponding to the temporary identity of the first user; or transmitting the third message.

In some possible implementations, after the terminal receives the first message, the method further includes that: the terminal receives the third message, where the third message carries at least one of: the updated temporary identity of the first user, the updated valid time, the updated valid region, or the identity of the first user.

Optionally, the timing for the terminal to receive the third message may be a time after the terminal receives the first message and after the terminal transmits the second message.

Optionally, the timing for the terminal to receive the third message may be at any moment after the terminal receives the first message from the first network device.

In this case, the terminal may not need to determine whether the temporary identity of the first user meets the first valid condition, but only wait to receive the third message transmitted from the first network device, and maintain the communication services corresponding to the temporary identity of the first user before receiving the third message transmitted from the first network device.

Alternatively, in this case, the terminal may determine whether the temporary identity of the first user meets the first valid condition. If the terminal has not determined that the temporary identity of the first user does not meet the first valid condition, and has received the third message transmitted from the first network device, the terminal receives and stores the contents of the third message, and at the same time stops the last determination for whether the temporary identity of the first user meets the first valid condition; in a case where the terminal determines that the temporary identity of the first user does not meet the first valid condition, the terminal may perform the processing of reporting the second message, and receive the third message transmitted from the first network device after transmitting the second message.

Optionally, the third message may only carry the updated temporary identity of the first user.

In this case, the terminal may store the updated temporary identity of the first user, and delete the previous temporary identity of the first user. The updated valid time corresponding to the updated temporary identity of the first user may be pre-configured; and/or the updated valid region corresponding to the updated temporary identity of the first user may also be pre-configured. The pre-configuration manners of the updated valid time and the updated valid region are not limited in this embodiment, as long as these manners for the terminal and the first network device are the same, they are within the protection scope of this embodiment.

Optionally, the third message may carry the updated temporary identity of the first user. Furthermore, the third message may further carry at least one of the updated valid time or the updated valid region.

In this case, the terminal may store the updated temporary identity of the first user, and delete the previous temporary identity of the first user at the same time. And the terminal may store the updated valid time and/or the updated valid region, and reconstruct a new first valid condition for the new temporary identity of the first user based on the updated valid time and/or the updated valid region, and then perform the same processing as the temporary identity of the first user, which will not be repeated herein.

Optionally, the third message may only carry the identity of the first user. The identity of the first user is a unique identity of the first user that remains unchanged in the network or system. The identity of the first user may also be referred to as a permanent identity of the first user. In this case, the terminal may store the identity of the first user, and use the identity of the first user for subsequent communications.

Optionally, the third message may carry the identity of the first user. Additionally, the third message may carry at least one of the updated valid time or the updated valid region. In this case, the terminal receives and stores the identity of the first user; and the terminal receives and stores at least one of the updated valid time or the updated valid region. At least one of the updated valid time or the updated valid region may be contents used to construct the valid service condition corresponding to the identity of the first user, which will not be described in detail herein.

In some possible implementations, the first network device transmitting a fourth message refers to that: the first network device transmits the fourth message to the terminal. The terminal receiving the fourth message refers to that: the terminal receives the fourth message transmitted from the first network device.

In an embodiment, the first network device transmitting the fourth message may include that: in a case where the first network device determines that a trigger condition is met, the first network device transmits the fourth message to the terminal. The trigger condition may include at least one of: the terminal transmitting a request message for allocating the identity (ID) of the first user to the network side, or an authorization procedure for the identity (ID) of the first user being performed between the network side and the ID of the first user being determined.

In this embodiment, the first network device is capable of allocating, storing, or generating an identity of the first user. Preferably, in this embodiment, the first network device may be at least one of the UDM, the UDR, or the identity management network element. In some possible examples, the first network device may further include at least one of the UDM, a UDR, the identity management network element, the AMF.

In an embodiment, the fourth message may be carried in at least one of: a fourth downlink NAS message, or a fourth downlink container.

Exemplarily, the fourth message may be carried in the fourth downlink NAS message.

For example, the fourth message may be carried in the fourth downlink NAS message transmitted from the first network device to the terminal. In this case, the first network device may be the AMF.

For example, the first network device may invoke a second network device to provide a specific service, transmit the fourth message to the second network device via an invoked service message, and the second network device may transmit the fourth message to the terminal via the fourth downlink NAS message carrying the fourth message. In this case, the first network device may be the identity management network element, and the second network device may be the AMF. Alternatively, the first network device may be at least one of the UDM or the UDR, and the second network device may be the AMF.

Exemplarily, the fourth message may be carried in the fourth downlink container. Furthermore, the fourth message may be carried in the fourth downlink container in the fourth downlink NAS message.

For example, the fourth message may be carried in the fourth downlink container in the fourth downlink NAS message transmitted from the first network device to the terminal. In this case, the first network device may be the AMF.

For example, the first network device may encapsulate the fourth message in the fourth downlink container, and transmit it to the second network device. The second network device may transmit the fourth downlink container to the terminal via the fourth downlink NAS message. In this case, the first network device may be the identity management network element, and the second network device may be the AMF. Alternatively, the first network device may be at least one of the UDM or the UDR, and the second network device may be the AMF.

In some possible implementations, the fourth message carries the identity of the first user. The identity of the first user may be allocated, stored, or generated for the first network device.

The identity of the first user may be used to specifically identify a specific user currently using the terminal. The identity of the first user may be a unique identity of the first user that remains unchanged in the network or system. The identity of the first user may also be referred to as a permanent identity of the first user.

It should also be noted that the fourth message may carry an identity of each of one or more users, and the one or more users may include the first user, that is, the first user may be any one of the one or more users. In other words, the network side (e.g., the first network device) may allocate or generate an identity for each of the one or more users of the terminal, and transmit the identity of each user to the terminal via the fourth message. It should also be understood that since the processing related to the identities of respective users are the same as the processing related to the identity of the first user, the following mainly uses the first user as an example for explanation. This does not mean that the solutions provided in this embodiment does not also perform related processing on the identities of other users. It is just for the sake of brevity that the processing related to the identity of respective users are not described one by one.

The identity of the first user includes at least one of: a code of the first user, a name of the first user, an identity of a network corresponding to the identity of the first user, an IMSI, a GUTI, or a PEI.

The code of the first user may be represented by any one of the code of the first user, the number of the first user, the index of the first user, the serial number of the first user, or a unique ID (unique identity), and the representation manners are not exhaustively listed or limited herein. The specific manner of generating or allocating the code of the first user is not limited in this embodiment.

The name of the first user may be a specific name used to represent the first user, for example, it may be represented as: "username", i.e., the user name.

The network corresponding to the identity of the first user may refer to an operator network corresponding to the identity of the first user. The operator network corresponding to the identity of the first user may refer to an operator network that allocates the identity of the first user, or an operator network that stores the identity of the first user.

The identity of the network corresponding to the identity of the first user may include: an ID of the network corresponding to the identity of the first user, or a name of the network corresponding to the identity of the first user.

Exemplarily, the operator network corresponding to the identity of the first user may be a PLMN, and the ID of the network corresponding to the identity of the first user is a PLMN ID. Exemplarily, the name of the operator network corresponding to the identity of the first user may be used as the name of the network corresponding to the identity of the first user. For example, the name of the network corresponding to the identity of the first user may be represented as "@Realm".

The identity of the first user may be of two types, or may be represented in two manners.

Manner 1 (or Type 1), the identity of the first user may at least include: the ID of the network corresponding to the identity of the first user and/or the code of the first user. For example, the identity of the first user may be represented as PLMN ID + the code of the first user.

In this manner, the identity of the first user may further include contents in addition to the ID of the network corresponding to the identity of the first user and the code of the first user, for example, the identity of the first user may further include at least one of a GUTI, an IMSI, a PEI, or the like. For example, the identity of the first user may be represented as PLMN ID + the code of the first user + GUTI; or the identity of the first user may be represented as PLMN ID + the code of the first user + IMSI; or, the identity of the first user may be represented as IMSI + code of the first user; or the identity of the first user may be represented as GUTI + code of the first user; or the identity of the first user may be represented as GUTI + PEI + code of the first user, or the like. Various possible compositions of the identity of the first user are not exhaustively listed herein.

Manner 2 (or Type 2), the identity of the first user may at least include: the name of the network corresponding to the identity of the first user and the name of the first user. For example, the identity of the first user may be represented as username@realm.

In this manner, the identity of the first user may further include contents in addition to the name of the network corresponding to the identity of the first user and the name of the first user, for example, the identity of the first user may further include at least one of a GUTI, an IMSI, a PEI, or the like. For example, the identity of the first user may be represented as "username, GUTI@realm", or "username&GUTI@realm", etc.; or the identity of the first user may be represented as "username, IMSI@realm", or "username&IMSI@realm", etc. Various possible composition and representation manners of the identity of the first user are not limited and exhaustively listed herein.

In some possible implementations, on the terminal side and/or the first network device side, a valid time and/or valid region may further be obtained. The valid time and/or valid region may be used to construct the valid service condition corresponding to the identity of the first user, that is, the valid time and/or valid region may be used to determine whether the corresponding communication services are able to be obtained for the identity of the first user.

The valid time is used to determine a time range of communication services corresponding to the identity of the first user. Optionally, the valid time may be a valid duration. Optionally, the valid time may include one or more valid time periods.

The valid region may be used to determine a region or range of communication services corresponding to the identity of the first user. That is, in a case where the terminal is located within the valid region, the communication services corresponding to the identity of the first user may be performed, provided or obtained. In a case where the terminal is not located within the valid region, the communication services corresponding to the identity of the first user cannot be performed, provided or obtained.

Optionally, the valid region may be represented by one or more coordinate values in a geographic coordinate system. Optionally, the valid region may be represented by a region identity within the communication system.

In an embodiment, in addition to allocating the identity of the first user, the first network device may further allocate the valid time and/or the valid region. Correspondingly, the fourth message further carries at least one of: the valid time, or the valid region. The manner of the first network device generating or allocating the valid time and/or valid region is not limited in this embodiment.

In an embodiment, on the terminal side, the valid time is pre-configured, and/or the valid region is pre-configured. Correspondingly, on the first network device side, the valid time is pre-configured, and/or the valid region is pre-configured.

It should be noted that the same valid time needs to be pre-configured on both the terminal side and the first network device side, and/or the same valid region needs to be pre-configured on both the terminal side and the first network device side.

In some possible implementations, after the terminal receives the fourth message, the method may further include that: the terminal transmits a second reply message, where the second reply message is used to indicate that the fourth message is successfully received. Correspondingly, after the first network device transmits the first message, the method may further include that: the first network device receives the second reply message.

Specifically, the terminal transmitting the second reply message may refer to that the terminal transmits the second reply message to the first network device. The first network device receiving the second reply message may refer to that: the first network device receives the second reply message transmitted from the terminal.

Exemplarily, the second reply message may be carried in the fourth uplink NAS message.

For example, the second reply message may be carried in the fourth uplink NAS message transmitted from the terminal to the first network device. In this case, the first network device may be the AMF.

For example, the second reply message may be carried in the fourth uplink NAS message transmitted from the terminal to the second network device, and the second network device may transmit the second reply message to the first network device. In this case, the first network device may be at least one of the identity management network element, the UDM, or the UDR, and the second network device may be the AMF.

In some possible implementations, after the terminal receives the fourth message, the method further includes that: in response to that the terminal does not meet a valid service condition corresponding to the identity of the first user, the terminal performs at least one operation of: stopping a portion or all of communication services corresponding to the identity of the first user; or transmitting a fifth message, where the fifth message is used to determine at least one of: the valid service condition corresponding to the identity of the first user being not met, a temporary identity of the first user being to be allocated, a valid time being to be updated, or a valid region being to be updated.

Herein, the valid service condition includes at least one of: being within the valid period; or the terminal being located within the valid region.

Here, being within the valid time may refer to that the communication services corresponding to the identity of the first user are within the valid time.

In an example, the valid time is a valid duration. The manner of the terminal determining whether the communication services corresponding to the identity of the first user are within the valid time may include that: the terminal initiates a third timer from a third moment; the terminal continuously determines whether a timing duration of the third timer is within the valid duration; if the timing duration of the third timer is within the valid duration, it is determined that the communication services corresponding to the identity of the first user are within the valid time; otherwise, it is determined that the communication services corresponding to the identity of the first user are not within the valid time.

Herein, the third moment is equal to a moment upon the terminal receiving the fourth message. Alternatively, the third moment may be equal to a moment upon the terminal transmitting the second reply message. Here, all possible situations of the third moment are not exhaustively listed. As long as the third moment is not earlier than the moment upon the terminal receiving the fourth message, all situations are within the protection scope of this embodiment.

In an example, the valid time is a valid time period. The manner of the terminal determining whether the communication services corresponding to the identity of the first user are within the valid time may include that: the terminal continuously determines whether the current moment is equal to or later than the end moment of the valid time period; if the current moment is not the end moment of the valid time period, it is determined that the communication services corresponding to the identity of the first user are within the valid time; if the current moment is equal to or later than the end moment of the valid time period, it is determined that the communication services corresponding to the identity of the first user are not within the valid time.

Alternatively, the valid time includes a plurality of valid time periods. The manner of the terminal determining whether the communication services corresponding to the identity of the first user are within the valid time may include that: if the current moment is within any valid time period, the terminal determines that the communication services corresponding to the identity of the first user are within the valid time; if the current moment is not within any valid time period, and the current moment is equal to or later than the end moment of the last valid time period among all valid time periods, then it is determined that the communication services corresponding to the identity of the first user is not within the valid time.

In an example, the terminal determining whether it is located within the valid region may refer to that: the terminal obtains a current location and determines whether the current location is located within the valid region.

The specific contents used for the valid service condition may be related to whether the fourth message carries the valid region and/or valid time, or whether the terminal is pre-configured with the valid region and/or valid time, etc., which will be illustrated by examples below.

In an embodiment, the fourth message carries the valid time, or the terminal and the first network device are pre-configured with the valid time. In this case, the valid service condition may include: being within the valid time.

In an embodiment, the fourth message carries the valid region, or the terminal and the first network device are pre-configured with the valid region. In this case, the valid service condition may include that the terminal is located within the valid region.

In an embodiment, the fourth message carries the valid time and the valid region, or the terminal and the first network device are pre-configured with the valid time. In this case, the valid service condition includes: being within the valid time, and the terminal being located within the valid region. Alternatively, the valid service condition may include any one of: being within the valid time, or the terminal being within the valid region.

It should be understood that the above contents are only illustrative descriptions of the possible combinations of the valid service condition. In actual processing, the valid service condition includes, but not limited to the above combinations. In this embodiment, all possible combinations are not exhaustively listed, nor are all possible contents that may be included in the valid service condition exhaustively listed or limited.

Stopping all or a portion of communication services corresponding to the identity of the first user may include at least one of: the terminal stopping transmission for all or a portion of CP messages (or control plane signaling) corresponding to the identity of the first user, the terminal stopping transmission for all or a portion of UP data corresponding to the identity of the first user, the terminal suspending or deactivating a PDU session corresponding to the identity of the first user, the terminal deactivating the context corresponding to the identity of the first user stored in the UE, or the like. Here, situations of the terminal stopping all or a portion of communication services corresponding to the identity of the first user are not exhaustively listed or limited.

Optionally, the fifth message may carry an explicitly second indication, and the second indication may be used to indicate at least one of: the valid service condition corresponding to the identity of the first user being not met, the temporary identity of the first user being to be allocated, the valid time being to be updated, or the valid region being to be updated.

The second indication may only indicate any one of: the valid service condition corresponding to the identity of the first user being not met, the temporary identity of the first user being to be allocated, the valid time being to be updated, or the valid region being to be updated; alternatively, the second indication may indicate two or more of: the valid service condition corresponding to the identity of the first user being not met, the temporary identity of the first user being to be allocated, the valid time being to be updated, or the valid region being to be updated, which is not limited in this embodiment.

The above-mentioned second indication may occupy one or more designated fields in the fifth message; for example, a first designated field in the fifth message may be used to indicate that the valid service condition corresponding to the identity of the first user is not met, a second designated field of the fifth message may be used to indicate or request to allocated the temporary identity of the first user, a third designated field of the fifth message may be used to indicate to update the valid time, and a fourth designated field of the fifth message is used to indicate to update the valid region. The specific indication manners of various designated fields may be based on specific description contents or may be indicated by carrying a designated value, all of which are within the protection scope of this embodiment, and are not exhaustively listed or limited herein.

It should be understood that the carrying manner and specific contents of the above-mentioned second indication in the fifth message are only exemplary illustrations. In actual processing, as long as there is at least one bit or at least one content in the fifth message for indicating at least one of: the valid service condition corresponding to the identity of the first user being not met, the temporary identity of the first user being to be allocated, the valid time being to be updated, or the valid region being to be updated, it is within the protection scope of this embodiment, and various possible forms are not limited or exhaustively listed herein.

Optionally, the fifth message may implicitly indicate at least one of: the valid service condition corresponding to the identity of the first user being not met, the temporary identity of the first user being to be allocated, the valid time being to be updated, or the valid region being to be updated.

In an example, the fifth message may carry the valid time and/or valid region. In this case, if the first network device receives the fifth message carrying the valid time and/or valid region, the first network device may determine at least one of: the valid service condition corresponding to the identity of the first user being not met, the temporary identity of the first user being to be allocated, the valid time being to be updated, or the valid region being to be updated.

In an example, the fifth message may not carry any content. As long as the terminal transmits a signal or message in a format agreed upon by both parties, the first network device may determine that the fifth message is used to indicate at least one of: the valid service condition corresponding to the identity of the first user being not met, the temporary identity of the first user being to be allocated, the valid time being to be updated, or the valid region being to be updated.

The fifth message is carried in at least one of: a second uplink non-access stratum (NAS) message, or a second uplink container.

For example, the fifth message may be carried in a second uplink container in the second uplink NAS message transmitted from the terminal to the second network device, and the second network device transmits the second uplink container to the first network device. In this case, the first network device may be at least one of the identity management network element, the UDM, or the UDR, and the second network device may be the AMF.

For example, the fifth message may be carried in a second uplink NAS message transmitted from the terminal to the second network device, and the second network device may extract the fifth message carried in the second reported NAS message and transmit it to the first network device. In this case, the first network device may be at least one of the identity management network element, the UDM, or the UDR, and the second network device may be the AMF.

For example, the fifth message may be carried in a second uplink NAS message transmitted from the terminal to the first network device. In this case, the first network device may be the AMF.

In some possible implementations, after the first network device transmits the fourth message, the method further includes that: the first network device receives the fifth message, where the fifth message is used to determine at least one of: the valid service condition corresponding to the identity of the first user being not met, the temporary identity of the first user being to be allocated, the valid time being to be updated, or the valid region being to be updated; and the first network device performs at least one operation of: stopping a portion or all of communication services corresponding to the identity of the first user, or transmitting a sixth message.

Optionally, the fifth message may be an implicit indication.

The fifth message may not carry any content. In a case where the first network device receives the fifth message, the first network device may determine that the valid service condition corresponding to the identity of the first user is not met; accordingly, the first network device may perform the processing of stopping a portion or all of communication services corresponding to the identity of the first user.

Alternatively, the fifth message may carry the valid time and/or the valid region. In a case where the first network device receives the fifth message, the first network device may determine at least one of: the valid service condition corresponding to the identity of the first user being not met, the temporary identity of the first user being to be allocated, the valid time being to be updated, or the valid region being to be updated; accordingly, the first network device may perform the processing of stopping a portion or all of communication services corresponding to the temporary identity of the first user and transmitting the sixth message.

In this case, the sixth message may carry at least one of: the temporary identity of the first user, the updated valid time, or the updated valid region. In this implementation, the temporary identity of the first user may include the same contents as that in the above embodiments, which will not be repeated herein. The manner of the first network device generating or allocating the temporary identity of the first user is not limited in this embodiment.

Alternatively, the fifth message may carry the valid time and/or the valid region. In a case where the first network device receives the fifth message, the first network device may determine at least one of: the valid service condition corresponding to the identity of the first user being not met, the temporary identity of the first user being to be allocated, the valid time being to be updated, or the valid region being to be updated; accordingly, the first network device may transmit the sixth message. In this case, the sixth message may carry at least one of: the temporary identity of the first user, the updated valid time, or the updated valid region.

Optionally, the fifth message may be an explicitly indication. In a case where the first network device receives the fifth message, the first network device may determine, based on the second indication in the fifth message, that the terminal indicates at least one of: the valid service condition corresponding to the identity of the first user being not met, the temporary identity of the first user being to be allocated, the valid time being to be updated, or the valid region being to be updated.

In a case where the first network device determines that the terminal indicates that the valid service condition corresponding to the identity of the first user is not met, the first network device may perform the processing of stopping a portion or all of communication services corresponding to the temporary identity of the first user.

Alternatively, in a case where the first network device determines that the terminal indicates to allocate the temporary identity of the first user, the first network device may perform the processing of transmitting the sixth message. In this case, the sixth message may carry the temporary identity of the first user; optionally, the sixth message may further carry at least one of: the updated valid time, or the updated valid region.

Alternatively, in a case where the first network device determines that the terminal indicates to update at least one of the valid time, or update the valid region, the first network device may perform the processing of stopping a portion or all of communication services corresponding to the temporary identity of the first user, and perform the processing of transmitting the sixth message. In this case, the sixth message may carry at least one of: the updated valid time, or the updated valid region. Optionally, the sixth message may carry the temporary identity of the first user.

Stopping all or a portion of communication services corresponding to the identity of the first user may include at least one of: the first network device stopping transmission for all or a portion of CP messages (or CP signaling) corresponding to the identity of the first user, the first network device stopping transmission for all or a portion of UP data corresponding to the identity of the first user, the first network device suspending or deactivating the PDU session corresponding to the identity of the first user, the first network device deactivating the context corresponding to the identity of the first user, or the like.

It should be pointed out that the first network device may be a portion of devices in the core network of the system. Therefore, the first network device stopping the transmission for all or a portion of the CP messages (or CP signaling) corresponding to the identity of the first user may further include that: the first network device notifies various network elements serving the first user to stop the transmission for all or a portion of the CP messages (or CP signaling) corresponding to the identity of the first user.

The first network device stopping the transmission for all or a portion of the UP data corresponding to the identity of the first user may further include that: the first network device notifies various network elements serving the first user to stop the transmission for all or a portion of the UP data corresponding to the identity of the first user.

The first network device suspending or deactivating the PDU session corresponding to the identity of the first user may further include that: the first network device notifies various network elements serving the first user to suspend or deactivate the PDU session corresponding to the identity of the first user.

The first network device deactivating the context corresponding to the identity of the first user may include that: the first network device notifies a network element storing the context corresponding to the identity of the first user to deactivate the context corresponding to the identity of the first user.

Here, situations of the first network device stopping all or a portion of communication services corresponding to the identity of the first user device are not exhaustively listed or limited.

Transmitting of the sixth message may refer to that: the first network device transmits the sixth message to the terminal. The sixth message is carried in at least one of: a third downlink NAS message, or a third downlink container.

For example, the first network device may invoke a second network device to provide a specific service, transmit the sixth message to the second network device via an invoked service message, and the second network device may transmit the sixth message to the terminal via the third downlink NAS message carrying the sixth message. In this case, the first network device may be at least one of the identity management network element, the UDM, or the UDR, and the second network device may be the AMF.

For example, the first network device may encapsulate the sixth message in the third downlink container, and transmit it to the second network device, and the second network device may transmit the third downlink container to the terminal via the third downlink NAS message. In this case, the first network device may be at least one of the identity management network element, the UDM, or the UDR, and the second network device may be the AMF.

For example, the sixth message may be carried in the third downlink NAS message transmitted from the first network device to the terminal. Alternatively, the sixth message may be carried in the third downlink container in the third downlink NAS message transmitted from the first network device to the terminal. In this case, the first network device may be the AMF.

In some possible implementations, after the first network device transmits the fourth message, the method may include that: in response to that the terminal does not meet the valid service condition corresponding to the identity of the first user, the first network device performs at least one operation of: stopping a portion or all of communication services corresponding to the identity of the first user, or transmitting the sixth message.

The valid service condition includes at least one of: being within the valid time; or the terminal being located within the valid region. Here, being within the valid time may refer to that the communication services corresponding to the identity of the first user are within the valid time.

In an example, the valid time is a valid duration. In this example, the manner of the first network device determining whether the communication services corresponding to the identity of the first user are within the valid time may include that: the first network device initiates a fourth timer from a fourth moment; the first network device continuously determines whether a timing duration of the fourth timer is within the valid duration; if the timing duration of the fourth timer is within the valid duration, it is determined that the communication services corresponding to the identity of the first user are within the valid time; otherwise, it is determined that the communication services corresponding to the identity of the first user are not within the valid time.

Herein, the fourth moment may be equal to a moment upon the first network device transmitting the fourth message. Alternatively, the second time may be equal to a moment upon the first network device receiving the second reply message. Here, all possible situations for the fourth moment are not exhaustively listed.

In an example, the valid time is one valid time period or a plurality of valid time periods. In this example, the manner of the first network device determining whether the communication services corresponding to the identity of the first user are within the valid time is the same as the manner of the terminal determining whether the communication services corresponding to the identity of the first user are within the valid time, which will not be repeated herein.

In an example, the first network device determining whether the terminal is located within the valid region may refer to that: the first network device obtains a current location of the terminal, and determines whether the current location of the terminal is located within the valid region.

The specific contents used for the valid service condition may be related to whether the fourth message carries the valid region and/or valid time, or whether the terminal is pre-configured with the valid region and/or valid time, etc., which will be illustrated by examples below. The contents that may be carried in the valid service condition are the same as those described in the above embodiments, and thus will not be repeated herein.

In this implementation, the first network device may determine by itself whether the valid service condition corresponding to the identity of the first user is met, and then the first network device directly performs corresponding processing. Further, in a case where the first network device determines that the valid service condition corresponding to the identity of the first user is not met, the first network device may only perform the operation of stopping a portion or all communication services corresponding to the identity of the first user, or the first network device may only perform the operation of transmitting the sixth message. Alternatively, the first network device may stop a portion or all communication services corresponding to the identity of the first user and transmit the sixth message. The specific processing performed by the first network device may be determined based on a pre-configured policy, which is not limited herein.

It should be pointed out that this embodiment may be combined with the processing of the first network device receiving the fifth message. For example, the first network device may continue to determine whether the valid service condition corresponding to the identity of the first user is met in a case of not receiving the fifth message transmitted from the terminal. In a case where it is determined that the valid service condition corresponding to the identity of the first user is not met, the first network device may perform at least one operation of: stopping a portion or all of communication services corresponding to the identity of the first user, or transmitting the sixth message.

For another example, in a case where the valid service condition corresponding to the identity of the first user is met and the fifth message from the terminal is received, the first network device may determine, based on the fifth message, at least one of: the valid service condition corresponding to the identity of the first user being not met, the temporary identity of the first user being to be allocated, the valid time being to be updated, or the valid region being to be updated, and then perform at least one operation of: stopping a portion or all of communication services corresponding to the identity of the first user, or transmitting the sixth message.

In some possible implementations, after the terminal receives the fourth message, the method further includes that: the terminal receives the sixth message, where the sixth message carries at least one of: the temporary identity of the first user, an updated valid time, or an updated valid region.

Optionally, the timing for the terminal to receive the sixth message may be a time after the terminal receives the fourth message and after the terminal transmits the fifth message.

Optionally, the timing for the terminal to receive the sixth message may be at any moment after the terminal receives the fourth message transmitted from the first network device.

In this case, the terminal may not determine whether the valid service condition corresponding to the identity of the first user is met, but only wait to receive the sixth message transmitted from the first network device, and maintain the communication services corresponding to the identity of the first user before receiving the sixth message transmitted from the first network device.

Alternatively, in this case, the terminal may determine whether the valid service condition corresponding to the identity of the first user is met. In a case where the terminal determines that the valid service condition corresponding to the identity of the first user is met, and receives the sixth message transmitted from the first network device, the terminal receives and stores the contents in the sixth message, and stops the last judgment for whether the valid service condition corresponding to the identity of the first user is met at the same time; in a case where the terminal determines that the valid service condition corresponding to the identity of the first user is not met, the terminal may perform the processing of reporting the fifth message, and receive the sixth message transmitted from the first network device.

Optionally, the sixth message may only carry the temporary identity of the first user. In this case, the terminal may store the temporary identity of the first user. The updated valid time corresponding to the temporary identity of the first user may be pre-configured; and/or the updated valid region corresponding to the temporary identity of the first user may also be pre-configured. The pre-configuration manners of the updated valid time and the updated valid region are not limited in this embodiment, as long as these manners for the terminal and the first network device are the same, they are within the protection scope of this embodiment. The terminal then performs processing related to the temporary identity of the first user, which will not be described in detail herein.

Optionally, the sixth message may carry the temporary identity of the first user. Furthermore, the sixth message may further carry at least one of the updated valid time or the updated valid region.

In this case, the terminal may store the temporary identity of the first user, and the terminal may store the updated valid time and/or the updated valid region, and reconstruct a first valid condition for the temporary identity of the first user based on the updated valid time and/or the updated valid region, and then perform the same processing as the temporary identity of the first user, which will not be repeated herein.

Optionally, the sixth message may only carry the updated valid time and/or the updated valid region. In this case, the terminal receives and stores at least one of the updated valid time or the updated valid region. At least one of the updated valid time or the updated valid region may be contents used to construct a new valid service condition corresponding to the identity of the first user, which will not be described in detail here.

Related information of user identity provided in the aforementioned embodiments of the present disclosure may include, for example, the identity of the first user (or a permanent identity) and/or the temporary identity of the first user; the relevant information of the user identity may be bound to or associated with a relevant identity as a profile, and stored in the first network device on the network side (e.g., the UDM, a new ID (identity) management network element). The relevant identity may be a relevant identity corresponding to the terminal (or a USIM card), for example, the relevant identity may include at least one of: a SUPI, an IMSI, or a PEI. In conjunction with FIG. 9, an exemplary description is given as an example, assuming that the first user is user A, and a profile corresponding to user A may include a permanent identity of user A, and optionally, may include at least one of a temporary identity of user A, a valid time, or a valid region. The temporary identity of user A (or at least one of the temporary identity of user A, the valid time, or the valid region) may be determined, allocated, or generated by the first network device based on actual conditions or actual needs after determining (or generating or allocating) the permanent identity of user A. At least one of the temporary identity of user A, the valid time, the valid region, or the permanent identity of user A may be transmitted to the terminal.

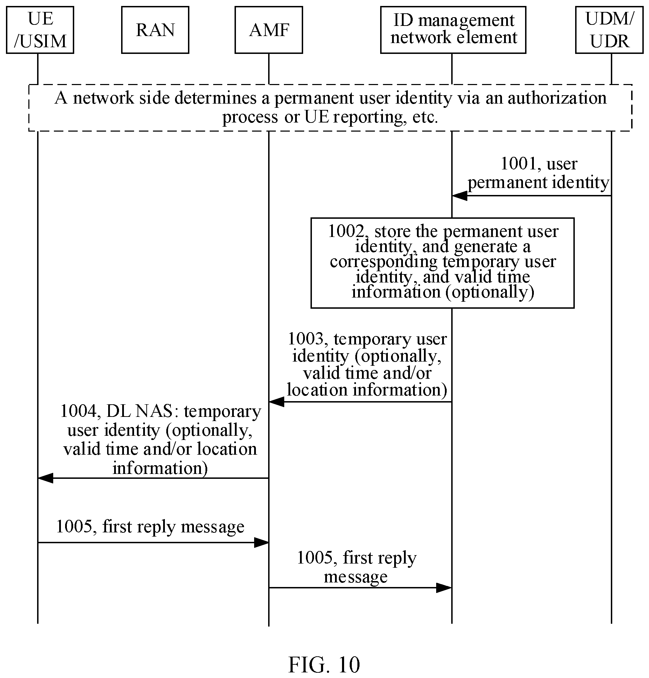

In conjunction with FIG. 10, an exemplary description is given by taking the terminal as a UE (which is illustrated as UE/USIM in FIG. 10) and the first network device as an ID management network element (i.e., an identity management network element) as an example for illustration.

In step 1001, the UDM/UDR stores the user permanent identity, and transmits the user permanent identity to the user ID management network element. The user permanent identity may be the identity of the first user in the aforementioned embodiments. Hereinafter, the user permanent identity may be replaced by user ID or permanent user ID, and the explanation will not be repeated.

It should be noted that step 1001 may be triggered by some conditions, for example, a network side determines the permanent user identity via an authorization process or UE reporting, etc. Exemplarily, the UE transmits a request message for allocating a user ID to the network side, or a user ID authorization process is performed between the network side and the UE to determine the user ID.

In step 1002, the ID management network element stores the received permanent user ID (identity) and generates a temporary user identity (ID); optionally, the ID management network element may generate the valid time and/or valid location information. Herein, the temporary user ID is the temporary identity of the first user in the aforementioned embodiments, and the valid location information (or valid location) is the valid region in the aforementioned embodiments.

Herein, the valid time is used to indicate the valid time of the temporary user ID. The valid time may refer to a duration (such as a duration set for a network element or terminal that subsequently receives the temporary identity to initiate the valid timer), or may refer to a time period (such as a time period from 9:00 to 10:00). The valid location refers to a region where the user ID is valid. A valid location of a user may be used to ensure the valid region in which the network provides services (such as data transmission services) to the user.

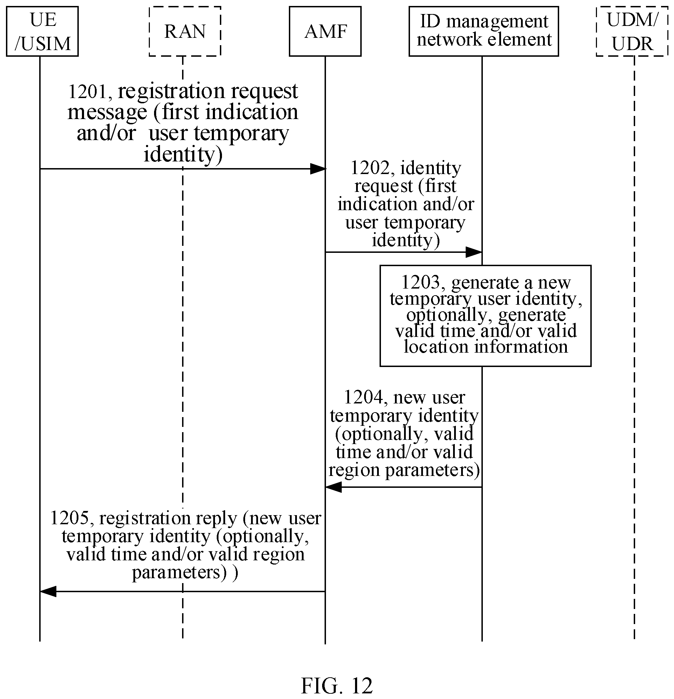

In a case where the valid time expires and/or the user (corresponding UE) is not in the valid location, at least one of the following operations may be performed: the 5G system may stop the communication services (such as stopping all or a portion of the data transmission on the user plane/all or a portion of the signaling transmission on the control plane), such as suspending or deactivating the PDU session, deactivating the context stored in the UE); the user ID is no longer valid and needs to be re-allocated on the network side (e.g., the UE may initiate the process shown in FIG. 12).

The above-mentioned valid time and/or valid location may also be statically configured or pre-negotiated parameters, which are configured in the UE and/or the network side (e.g., ID management network element).

In steps 1003-1004, the ID management network element transmits the temporary user identity (optionally, the valid time and/or the location information) to the AMF, and the AMF transmits the temporary user identity to the UE side.

These steps may be implemented in two manners. In manner 1, the ID management network element invokes the AMF to provide a specific service. The ID management network element carries the temporary user identity (optionally, the valid time and/or location information) in the invoked service message and transmits it to the AMF; after receiving the invoked message, the AMF transmits the temporary user identity (optionally, the valid time and/or location information) to the UE via a downlink (DL) NAS message. In manner 2, the ID management network element encapsulates the temporary user identity (optionally, the valid time and/or location information) in a container and transmits it to the AMF, the AMF forwards the container to the UE using a downlink NAS message.

In step 1005, the UE transmits a first reply message to the network side to confirm successful reception. Specifically, the UE may transmit the first reply message to the AMF, and the AMF transmits the first reply message to the ID management network element.

It may further include that: after receiving the temporary user identity (optionally, the valid time and/or location information), the UE stores the information. The above-mentioned message carrying the temporary user identity (optionally, the valid time and/or location information) received by the UE is the first message in the aforementioned embodiments.

In addition, if the UE receives the valid time information (or the UE is pre-configured with the valid time), the UE may initiate a corresponding timer. A network side network element (e.g., the ID management network element and/or AMF) may initiate the timer after receiving the first reply message; or the network side network element may also initiate the timer in a case where step 1002, step 1003 or step 1004 occurs, that is, there is no need to wait for the first reply message from the UE.

It should also be pointed out that if the network side (such as the ID management network element) does not allocate the temporary identity, and only the permanent user ID is used, the user ID transmitted from the AMF to the UE is the permanent user ID. In this case, the network side may still be made to generate the valid time and valid location parameters. That is, the processing of the first network device (such as ID management network element, UDM or UDR) transmitting the fourth message (carrying the identity of the first user) and related processing in the aforementioned embodiments may be performed, and will not be repeated herein.

In addition, the temporary identity or the permanent user identity may both be allocated and maintained by the ID management network element, and then step 1001 does not need to be performed. On the contrary, both the temporary identity and the permanent user identity may be allocated by a UDM/UDR, then step 1002 may be performed by the UDM/UDR. In this scenario, the UDM/UDR may be the first network device in the aforementioned embodiments, and the ID management network element may not be needed, or may only be used to store the identity.

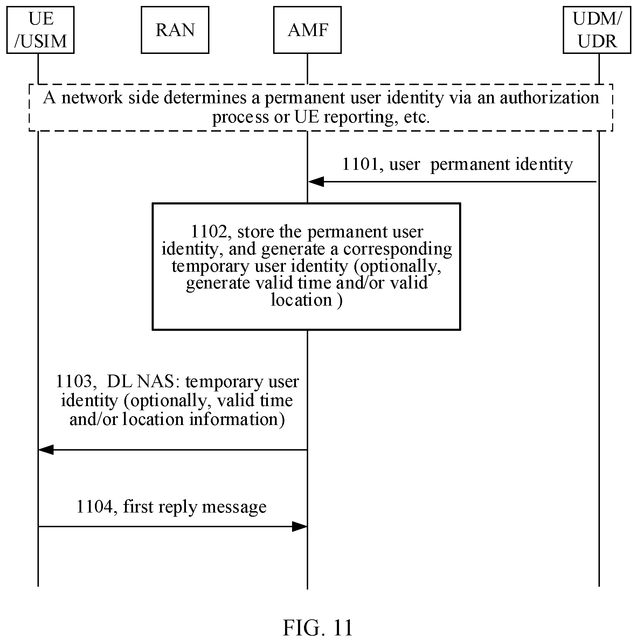

In conjunction with FIG. 11, taking the terminal as a UE (illustrated as UE/USIM in FIG. 11) and the first network device as an AMF as an example, this process is consistent with the principles of the process shown in FIG. 10. There is no ID management network element in FIG. 11, and all functions of the ID management network element in FIG. 10 are replaced by functions of the AMF. For this reason, the AMF may directly transmit relevant parameters to the UE via the DL NAS message without generating a new container. Specifically, this may include following contents.

In step 1101, the UDM/UDR stores a user permanent identity, and transmits the user permanent identity to the AMF. The user permanent identity may be the identity of the first user in the aforementioned embodiments. In the following text, the user permanent identity may be alternatively expressed as a user ID or a permanent user ID, and no further explanation will be given.

It should be noted that step 1101 may be triggered by some conditions, and the relevant description is the same as that of the above example, which will not be repeated.

In step 1102, the AMF stores the received permanent user ID, and generates a temporary user identity (ID); optionally, the AMF may generate valid time and/or valid location information.

In step 1103, the AMF transmits the temporary user identity (optionally, the valid time and/or location information) to the UE via a downlink (DL) NAS message.

In step 1104, the UE transmits a first reply message to the AMF to confirm successful reception.

In conjunction with FIG. 12, an exemplary description is given by taking the terminal as a UE (which is illustrated as UE/USIM in FIG. 12) and the first network device as an ID management network element (i.e., an identity management network element) as an example for yet another illustration.

In step 1201, the UE transmits an uplink NAS message (e.g., a registration request message) to the AMF, which may carry a first indication and/or a user temporary identity. The first indication and/or user temporary identity carried in this step may be the second message in the aforementioned embodiments. The user temporary identity is the temporary identity of the first user in the aforementioned embodiments.

Herein, the first indication is used to indicate at least one of: allocating the user (temporary) identity, or the valid time or valid location for the user (or the UE) being no longer met.

As an optional manner, the UE may encapsulate the relevant parameters (first indication and/or user temporary identity) in a container, and transmit it to the AMF via a UL NAS message. As another optional manner, the UE puts the relevant parameters (first indication and/or user temporary identity) directly in the UL NAS message, and transmits it to the AMF.

It should be noted that the UE transmitting step 1201 may be based on certain conditions, such as the expiration of the "valid time" timer of the user temporary identity, the UE moving out of the valid location, or the user temporary identity of the UE and the existing GUTI being updated at the same time (the user temporary identity may be updated while updating the GUTI).

In addition, step 1201 may also be used for the UE to request a permanent user identity. In this case, all user temporary identities in the following steps no longer need to be generated and maintained. The network side may simply reply to the UE with a permanent user identity, but the valid time/location may still be allocated as usual.

In steps 1202-1203, the AMF transmits an identity request carrying the first indication and/or the user temporary identity to the ID management network element. The ID management network element updates and generates a new temporary user identity, optionally, may also generate valid time and/or valid location information.

If the UE uses the Container in step 1201, the AMF forwards the container to the ID management network element in these steps. Otherwise, AMF transmits the parameters to the ID management network element by invoking a service provided by the ID management network element.

In steps 1204-1205, the ID management network element transmits the new user temporary identity (optionally, valid time and/or valid region parameters) to the UE via the AMF. The message transmitted from the AMF to the UE may be a registration reply message, which may be the third message in the aforementioned embodiments. It should be noted that the invoking manner of using container or service in this step is the same as the previous steps, which will not be repeated herein.

The above solutions may also implement the processes and methods of allocating and managing the user identity and/or the temporary identity on the network side, and also implement the processes and methods of terminal requesting to allocate the user identity and/or temporary identity. By adopting the above solutions, the permanent identity and/or the temporary identity may be defined for users, thereby distinguishing different users using the same terminal; in addition, new network elements may be used or new functions may be added on the network side, so that the network side may maintain profiles at a user granularity.

Specifically, by adopting the solutions provided in the above embodiments, the terminal may receive the temporary identity of the first user carried in the first message, where the first user is the user using the terminal. In this way, the terminal and the network side may identify each user based on the temporary identity of the user, and thus provide corresponding management and communication services for different users using the terminal.

In addition, the terminal may receive the identity of the first user carried in the fourth message, where the first user is the user using the terminal. In this way, the terminal and the network side may identify each user based on the user identity, and thus provide corresponding management and communication services for different users using the terminal.

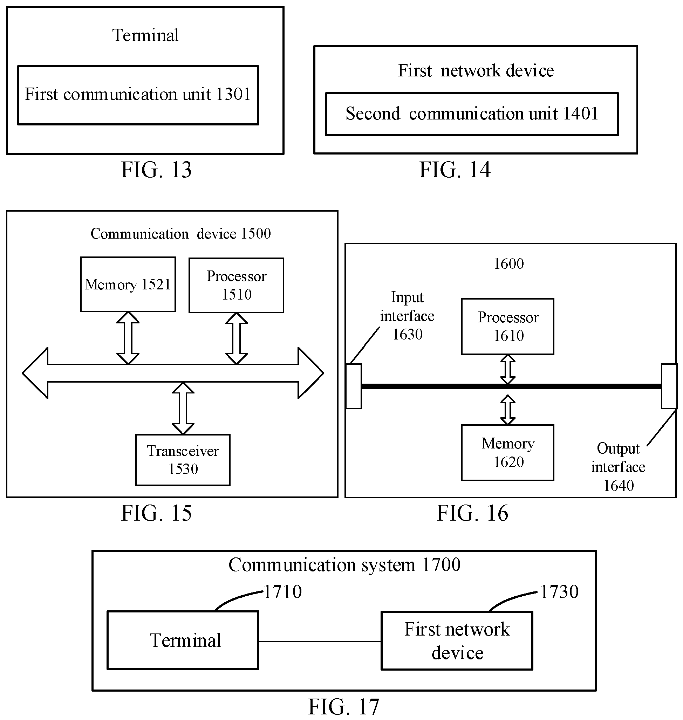

FIG. 13 is a schematic structural diagram of a composition of a terminal according to an embodiment of the present disclosure, including:
a first communication unit 1301, configured to receive a first message, where the first message carries a temporary identity of a first user, and the first user is a user using the terminal.

The temporary identity of the first user includes at least one of: an identity of a region corresponding to the temporary identity of the first user, a relevant identity of a network device corresponding to the temporary identity of the first user, an identity of a network corresponding to the temporary identity of the first user, a TMSI, an IMSI, a GUTI, or a PEI.

The temporary identity of the first user further includes: a code of the first user, where the code of the first user is allocated by a network device serving the terminal.

The region corresponding to the temporary identity of the first user includes at least one of: a region where the network device corresponding to the temporary identity of the first user is located; or a region where the temporary identity of the first user is valid.

The relevant identity of the network device corresponding to the temporary identity of the first user includes at least one of: an identity of a set to which the network device corresponding to the temporary identity of the first user belongs; or an identity of the network device corresponding to the temporary identity of the first user.

The first communication unit is configured to, in response to that the temporary identity of the first user does not meet a first valid condition, perform at least one operation of: stopping all or a portion of communication services corresponding to the temporary identity of the first user; or transmitting a second message, where the second message is used to determine at least one of: the temporary identity of the first user being invalid, a relevant identity of the first user being to be updated, or the temporary identity of the first user not meeting the first valid condition.

The first valid condition includes at least one of: the temporary identity of the first user being within a valid time; the terminal being located within a valid region; the terminal being located within a region where the temporary identity of the first user is valid; or there being no other relevant identity that needs to be updated for the terminal.

The first message further carries at least one of: a valid time, or a valid region.

The valid time is pre-configured, and/or the valid region is pre-configured.

The second message carries the temporary identity of the first user.

The second message is carried in at least one of: a first uplink non-access stratum (NAS) message, or a first uplink container.

The first communication unit is configured to receive a third message, where the third message carries at least one of: an updated temporary identity of the first user, an updated valid time, an updated valid region, or an identity of the first user.

The identity of the first user includes at least one of: a code of the first user, a name of the first user, an identity of a network corresponding to the identity of the first user, an IMSI, a GUTI, or a PEI.

The third message is carried in at least one of: a first downlink NAS message, or a first downlink container.

The first message is carried in at least one of: a second downlink NAS message, or a second downlink container.

FIG. 14 is a schematic structural diagram of a composition of a first network device according to an embodiment of the present disclosure, including:
a second communication unit 1401, configured to transmit a first message, where the first message carries a temporary identity of a first user, and the first user is a user using a terminal.

The temporary identity of the first user includes at least one of: an identity of a region corresponding to the temporary identity of the first user, a relevant identity of a network device corresponding to the temporary identity of the first user, an identity of a network corresponding to the temporary identity of the first user, a TMSI, an IMSI, a GUTI, or a PEI.

The temporary identity of the first user further includes: a code of the first user.

The region corresponding to the temporary identity of the first user includes at least one of: a region where the network device corresponding to the temporary identity of the first user is located; or a region where the temporary identity of the first user is valid.

The relevant identity of the network device corresponding to the temporary identity of the first user includes at least one of: an identity of a set to which the network device corresponding to the temporary identity of the first user belongs; or an identity of the network device corresponding to the temporary identity of the first user.

The second communication unit is configured to, in response to that the temporary identity of the first user does not meet a second valid condition, perform at least one operation of: stopping a portion or all of communication services corresponding to the temporary identity of the first user; or transmitting a third message.

The second valid condition includes at least one of: the temporary identity of the first user being within a valid time; the terminal being located within a valid region; or the terminal being located within the region where the temporary identity of the first user is used.

The second communication unit is configured to receive a second message, where the second message is used to determine at least one of: the temporary identity of the first user being invalid, a relevant identity of the first user being to be updated, or the temporary identity of the first user not meeting a first valid condition; and perform at least one operation of: stopping a portion or all of communication services corresponding to the temporary identity of the first user; or transmitting a third message.

The second message carries the temporary identity of the first user.

The second message is carried in at least one of: a first uplink non-access stratum (NAS) message, or a first uplink container.

The third message carries at least one of: an updated temporary identity of the first user, an updated valid time, an updated valid region, or an identity of the first user.

The identity of the first user includes at least one of: a code of the first user, a name of the first user, an identity of a network corresponding to the identity of the first user, an IMSI, a GUTI, or a PEI.

The third message is carried in at least one of: a first downlink NAS message, or a first downlink container.

The valid time is pre-configured, and/or the valid region is pre-configured.

The first message further carries at least one of: a valid time, or a valid region.

The first message is carried in at least one of: a second downlink NAS message, or a second downlink container.

The first network device includes at least one of: an access and mobility management function (AMF), a unified data management (UDM), a unified data repository (UDR), or an identity management network element.

A schematic structural diagram of a composition of a terminal device is further provided in an embodiment of the present disclosure, where the terminal device includes:
a first communication unit, configured to receive a fourth message, where the fourth message carries an identity of a first user, and the first user is a user using the terminal.

The identity of the first user includes at least one of: a code of the first user, a name of the first user, an identity of a network corresponding to the identity of the first user, an IMSI, a GUTI, or a PEI.

The first communication unit is configured to, in response to that the terminal does not meet a valid service condition corresponding to the identity of the first user, perform at least one operation of: stopping a portion or all of communication services corresponding to the identity of the first user; or transmitting a fifth message, wherein the fifth message is used to determine at least one of: the valid service condition corresponding to the identity of the first user being not met, a temporary identity of the first user being to be allocated, a valid time being to be updated, or a valid region being to be updated.

The valid service condition includes at least one of: being within the valid period; or the terminal being located within the valid region.

The fifth message is further used to determine to allocate the temporary identity of the first user.

The fifth message is carried in at least one of: a second uplink non-access stratum (NAS) message, or a second uplink container.

The valid time is pre-configured, and/or the valid region is pre-configured.

The fourth message further carries at least one of: a valid time, or a valid region.

The first communication unit is configured to receive a sixth message, where the sixth message carries at least one of: a temporary identity of the first user, an updated valid time, or an updated valid region.

The sixth message is carried in at least one of: a third downlink NAS message, or a third downlink container.

The fourth message is carried in at least one of: a fourth downlink NAS message, or a fourth downlink container.

A schematic structural diagram of a composition of a first network device is further provided in an embodiment of the present disclosure, where the first network device includes:
a second communication unit, configured to transmit a fourth message, where the fourth message carries an identity of a first user, and the first user is a user using a terminal.

The identity of the first user includes at least one of: a code of the first user, a name of the first user, an identity of a network corresponding to the identity of the first user, an IMSI, a GUTI, or a PEI.

The second communication unit is configured to, in response to that the terminal does not meet a valid service condition corresponding to the identity of the first user, cause the first network device to perform at least one operation of: stopping a portion or all of communication services corresponding to the identity of the first user; or transmitting a sixth message.

The valid service condition includes at least one of: being within the valid time; or the terminal being located within the valid region.

The second communication unit is configured to receive a fifth message, where the fifth message is used to determine at least one of: the valid service condition corresponding to the identity of the first user being not met, a temporary identity of the first user being to be allocated, a valid time being to be updated, or a valid region being to be updated; and perform at least one operation of: stopping a portion or all of communication services corresponding to the identity of the first user; or transmitting a sixth message.

The fifth message is carried in at least one of: a second uplink non-access stratum (NAS) message, or a second uplink container.

The sixth message carries at least one of: a temporary identity of the first user, an updated valid time, or an updated valid region.

The sixth message is carried in at least one of: a third downlink NAS message, or a third downlink container.

The valid time is pre-configured, and/or the valid region is pre-configured.

The fourth message further carries at least one of: a valid time, or a valid region.

The fourth message is carried in at least one of: a fourth downlink NAS message, or a fourth downlink container.

The first network device includes at least one of: an access and mobility management function (AMF), a unified data management (UDM), a unified data repository (UDR), or an identity management network element.

The device according to the embodiments of the present disclosure may implement the corresponding functions of various devices in the aforementioned authentication method embodiments. The processes, functions, implementations and beneficial effects corresponding to various modules (sub-modules, units or components, etc.) in the terminal device or the first network device may refer to in the corresponding description in the above method embodiments, which will not be repeated herein. It needs to be noted that the functions described for various modules (sub-modules, units or components, etc.) in the terminal device or the first network device of the embodiments of the application may be implemented by different modules (sub-modules, units or components, etc., or may also be implemented by a same module (sub-module, unit or component, etc.).

FIG. 15 is a schematic structural diagram of a communication device 1500 according to the embodiments of the present disclosure. The communication device 1500 includes a processor 1510, and the processor 1510 may invoke and execute a computer program from a memory to enable the communication device 1500 to implement the method in the embodiments of the present disclosure. In a possible implementation, the communication device 1500 may further include a memory 1520. Herein, the processor 1510 may invoke and execute a computer program from the memory 1520 to enable the communication device 1500 to implement the method in the embodiments of the present disclosure. Herein, the memory 1520 may be a separate device independent from the processor 1510, or may be integrated into the processor 1510. In a possible implementation, the communication device 1500 may further include a transceiver 1530. The processor 1510 may control the transceiver 1530 to communicate with other devices, and specifically, to transmit information or data to other devices, or receive information or data transmitted from other devices. Herein, the transceiver 1530 may include a transmitter and a receiver. The transceiver 1530 may further include an antenna (antennas), and the number of the antenna may be one or more.

In a possible implementation, the communication device 1500 may be a terminal device or a first network device in the embodiments of the present disclosure, and the communication device 1500 may implement the corresponding processes implemented by the terminal device or the first network device in various methods of the embodiments of the present disclosure, which will not be repeated herein for the sake of brevity.

FIG. 16 is a schematic structural diagram of a chip 1600 according to the embodiments of the present disclosure. The chip 1600 includes a processor 1610, the processor 1610 may invoke and execute a computer program from a memory to implement the method in the embodiments of the present disclosure. In a possible implementation, the chip 1600 may further include a memory 1620. The processor 1610 may invoke and execute a computer program from the memory 1620 to implement the method performed by the first device or a target second device in the embodiments of the present disclosure. Herein, the memory 1620 may be a separate device independent from the processor 1610, or may be integrated into the processor 1610. In a possible implementation, the chip 1600 may further include an input interface 1630. The processor 1610 may control the input interface 1630 to communicate with other devices or chips, and specifically, to acquire information or data transmitted from other devices or chips. In a possible implementation, the chip 1600 may further include an output interface 1640. The processor 1610 may control the output interface 1640 to communicate with other devices or chips, and specifically, to output information or data to other devices or chips.

In a possible implementation, the chip may be applied to the terminal device or the first network device in the embodiments of the present disclosure, and the chip may implement the corresponding processes implemented by the terminal device or the first network device in the various methods of the embodiments of the present disclosure, which will not be repeated herein for the sake of brevity. It should be understood that the chip mentioned in the embodiments of the present disclosure may also be referred to as a system on chip, a system chip, a chip system or a system-on-chip chip, etc. The processor mentioned above can be a general-purpose processor, a digital signal processor (DSP), a field programmable gate array (FPGA), an application specific integrated circuit (ASIC) or other programmable logic devices, transistor logic devices, discrete hardware components, etc. Herein, the general-purpose processor mentioned above may be a microprocessor or may also be any conventional processor. The memory mentioned above may be a volatile memory or a non-volatile memory, or may include both volatile and non-volatile memories. Herein, the non-volatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM) or a flash memory. The volatile memory may be a random access memory (RAM). It should be understood that the above-mentioned memory is exemplary but not limiting illustration, e.g., the memory in embodiments of the present disclosure may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synch link DRAM, SLDRAM), a direct rambus random access memory (direct rambus RAM, DR RAM), etc. That is, the memory in the embodiments of the present disclosure is intended to include, but not limited to, these and any other suitable types of memories.

FIG. 17 is a schematic block diagram of a communication system 1700 according to the embodiments of the present disclosure. The communication system 1700 includes a terminal 1710 and a first network device 1720. Herein, the terminal 1710 may be configured to implement the corresponding functions implemented by the terminal in the above-mentioned methods. The first network device 1720 may be used to implement the corresponding functions implemented by the first network device in the above-mentioned methods, which will not be repeated herein for the sake of brevity.

The above embodiments may be implemented in whole or in part through software, hardware, firmware, or any combination thereof. When the above embodiments are implemented by using software, they may be implemented in the form of a computer program product in whole or in part. The computer program product includes one or more computer instructions. When computer program instructions are loaded and executed on a computer, processes or functions according to the embodiments of the present disclosure are generated in whole or in part. The computer may be a general-purpose computer, a dedicated computer, a computer network, or any other programmable apparatus. The computer instructions may be stored in a computer-readable storage medium or transmitted from one computer-readable storage medium to another computer-readable storage medium, for example, the computer instructions may be transmitted from a website site, computer, server, or data center to another website site, computer, server, or data center via wired (such as coaxial cable, fiber optic, digital subscriber line (DSL)) or wireless (such as infrared, radio, microwave, etc.) means. The computer-readable storage medium may be any available medium that is capable of being accessed by the computer, or a data storage device, such as including a server or a data center that integrates one or more available media. The available medium may be a magnetic medium (e.g., a floppy disk, a hard disk or a magnetic tape), an optical medium (e.g., a digital video disk (DVD)) or a semiconductor medium (e.g., a solid state disk (SSD)), etc.

It should be understood that, in the various embodiments of the present disclosure, a size of serial numbers of the above processes does not imply an order of execution, and the execution order of the respective processes should be determined by their function and internal logic, but should not constitute any limitation on the implementation processes of the embodiments of the present disclosure. Those skilled in the art may clearly understand that, for the convenience and brevity of the description, the specific working processes of the systems, apparatus and units described above may refer to the corresponding processes in the above method embodiments, which will not be repeated herein. The above description is only the specific implementation of the present disclosure, but the protection scope of the present disclosure is not limited thereto, and any skilled familiar with this technical field may easily think of changes or substitutions within the technical scope disclosed in the present disclosure, which should be all covered within the protection scope of the present disclosure. Therefore, the protection scope of the present disclosure should be subject to the protection scope of claims.

## Claims

1. A communication method, comprising:
receiving, by a terminal, a first message, wherein the first message carries a temporary identity of a first user, and the first user is a user using the terminal.

2. The method according to claim 1, wherein the temporary identity of the first user comprises at least one of: an identity of a region corresponding to the temporary identity of the first user, a relevant identity of a network device corresponding to the temporary identity of the first user, an identity of a network corresponding to the temporary identity of the first user, a temporary mobile subscriber identity (TMSI), an international mobile subscriber identity (IMSI), a globally unique temporary UE identity (GUTI), or a permanent equipment identifier (PEI).

3. The method according to claim 1 or 2, wherein the temporary identity of the first user further comprises: a code of the first user, wherein the code of the first user is allocated by a network device serving the terminal.

4. The method according to claim 2, wherein the region corresponding to the temporary identity of the first user comprises at least one of:
a region where the network device corresponding to the temporary identity of the first user is located; or
a region where the temporary identity of the first user is valid.

5. The method according to claim 2, wherein the relevant identity of the network device corresponding to the temporary identity of the first user comprises at least one of:
an identity of a set to which the network device corresponding to the temporary identity of the first user belongs; or
an identity of the network device corresponding to the temporary identity of the first user.

6. The method according to any one of claims 1 to 5, wherein after the terminal receiving the first message, the method further comprises:
in response to that the temporary identity of the first user does not meet a first valid condition, performing, by the terminal, at least one operation of: stopping all or a portion of communication services corresponding to the temporary identity of the first user; or transmitting a second message, wherein the second message is used to determine at least one of: the temporary identity of the first user being invalid, a relevant identity of the first user being to be updated, or the temporary identity of the first user not meeting the first valid condition.

7. The method according to claim 6, wherein the first valid condition comprises at least one of: the temporary identity of the first user being within a valid time; the terminal being located within a valid region; the terminal being located within a region where the temporary identity of the first user is valid; or there being no other relevant identity that needs to be updated for the terminal.

8. The method according to any one of claims 1 to 7, wherein the first message further carries at least one of: a valid time, or a valid region.

9. The method according to claim 7, wherein the valid time is pre-configured, and/or the valid region is pre-configured.

10. The method according to claim 6 or 7, wherein the second message carries the temporary identity of the first user.

11. The method according to claim 6 or 7, wherein the second message is carried in at least one of: a first uplink non-access stratum (NAS) message, or a first uplink container.

12. The method according to any one of claims 1 to 11, wherein after the terminal receiving the first message, the method further comprises:
receiving, by the terminal, a third message, wherein the third message carries at least one of: an updated temporary identity of the first user, an updated valid time, an updated valid region, or an identity of the first user.

13. The method according to claim 12, wherein the identity of the first user comprises at least one of: a code of the first user, a name of the first user, an identity of a network corresponding to the identity of the first user, an IMSI, a GUTI, or a PEI.

14. The method according to claim 12 or 13, wherein the third message is carried in at least one of: a first downlink NAS message, or a first downlink container.

15. The method according to any one of claims 1 to 14, wherein the first message is carried in at least one of: a second downlink NAS message, or a second downlink container.

16. A communication method, comprising:
transmitting, by a first network device, a first message, wherein the first message carries a temporary identity of a first user, and the first user is a user using a terminal.

17. The method according to claim 16, wherein the temporary identity of the first user comprises at least one of: an identity of a region corresponding to the temporary identity of the first user, a relevant identity of a network device corresponding to the temporary identity of the first user, an identity of a network corresponding to the temporary identity of the first user, a temporary mobile subscriber identity (TMSI), an international mobile subscriber identity (IMSI), a globally unique temporary UE identity (GUTI), or a permanent equipment identifier (PEI).

18. The method according to claim 16 or 17, wherein the temporary identity of the first user further comprises: a code of the first user.

19. The method according to claim 17, wherein the region corresponding to the temporary identity of the first user comprises at least one of:
a region where the network device corresponding to the temporary identity of the first user is located; or
a region where the temporary identity of the first user is valid.

20. The method according to claim 17, wherein the relevant identity of the network device corresponding to the temporary identity of the first user comprises at least one of:
an identity of a set to which the network device corresponding to the temporary identity of the first user belongs; or
an identity of the network device corresponding to the temporary identity of the first user.

21. The method according to any one of claims 16 to 20, wherein after the first network device transmitting the first message, the method further comprises:
in response to that the temporary identity of the first user does not meet a second valid condition, performing, by the first network device, at least one operation of: stopping a portion or all of communication services corresponding to the temporary identity of the first user; or transmitting a third message.

22. The method according to claim 21, wherein the second valid condition comprises at least one of: the temporary identity of the first user being within a valid time; the terminal being located within a valid region; or the terminal being located within the region where the temporary identity of the first user is used.

23. The method according to any one of claims 16 to 20, after the first network device transmitting the first message, the method further comprises:
receiving, by the first network device, a second message, wherein the second message is used to determine at least one of: the temporary identity of the first user being invalid, a relevant identity of the first user being to be updated, or the temporary identity of the first user not meeting a first valid condition; and
performing, by the first network device, at least one operation of: stopping a portion or all of communication services corresponding to the temporary identity of the first user; or transmitting a third message.

24. The method according to claim 23, wherein the second message carries the temporary identity of the first user.

25. The method according to claim 23 or 24, wherein the second message is carried in at least one of: a first uplink non-access stratum (NAS) message, or a first uplink container.

26. The method according to any one of claims 21-25, wherein the third message carries at least one of: an updated temporary identity of the first user, an updated valid time, an updated valid region, or an identity of the first user.

27. The method according to claim 26, wherein the identity of the first user comprises at least one of: a code of the first user, a name of the first user, an identity of a network corresponding to the identity of the first user, an IMSI, a GUTI, or a PEI.

28. The method according to any one of claims 21 to 26, wherein the third message is carried in at least one of: a first downlink NAS message, or a first downlink container.

29. The method according to claim 22, wherein the valid time is pre-configured, and/or the valid region is pre-configured.

30. The method according to any one of claims 16 to 28, wherein the first message further carries at least one of: a valid time, or a valid region.

31. The method according to any one of claims 16 to 30, wherein the first message is carried in at least one of: a second downlink NAS message, or a second downlink container.

32. The method according to any one of claims 16 to 31, wherein the first network device comprises at least one of: an access and mobility management function (AMF), a unified data management (UDM), a unified data repository (UDR), or an identity management network element.

33. A communication method, comprising:
receiving, by a terminal, a fourth message, wherein the fourth message carries an identity of a first user, and the first user is a user using the terminal.

34. The method according to claim 33, wherein the identity of the first user comprises at least one of: a code of the first user, a name of the first user, an identity of a network corresponding to the identity of the first user, an international mobile subscriber identity (IMSI), a globally unique temporary UE identity (GUTI), or a permanent equipment identifier (PEI).

35. The method according to claim 33 or 34, wherein after the terminal receiving the fourth message, the method further comprises:
in response to that the terminal does not meet a valid service condition corresponding to the identity of the first user, performing, by the terminal, at least one operation of: stopping a portion or all of communication services corresponding to the identity of the first user; or transmitting a fifth message, wherein the fifth message is used to determine at least one of: the valid service condition corresponding to the identity of the first user being not met, a temporary identity of the first user being to be allocated, a valid time being to be updated, or a valid region being to be updated.

36. The method according to claim 35, wherein the valid service condition comprises at least one of: being within the valid period; or the terminal being located within the valid region.

37. The method according to claim 35 or 36, wherein the fifth message is further used to determine to allocate the temporary identity of the first user.

38. The method according to any one of claims 35 to 37, wherein the fifth message is carried in at least one of: a second uplink non-access stratum (NAS) message, or a second uplink container.

39. The method according to claim 36, wherein the valid time is pre-configured, and/or the valid region is pre-configured.

40. The method according to any one of claims 33 to 38, wherein the fourth message further carries at least one of: a valid time, or a valid region.

41. The method according to any one of claims 33 to 40, wherein after the terminal receiving the fourth message, the method further comprises:
receiving, by the terminal, a sixth message, wherein the sixth message carries at least one of: a temporary identity of the first user, an updated valid time, or an updated valid region.

42. The method according to claim 41, wherein the sixth message is carried in at least one of: a third downlink NAS message, or a third downlink container.

43. The method according to any one of claims 33 to 42, wherein the fourth message is carried in at least one of: a fourth downlink NAS message, or a fourth downlink container.

44. A communication method comprising:
transmitting, by a first network device, a fourth message, wherein the fourth message carries an identity of a first user, and the first user is a user using a terminal.

45. The method according to claim 44, wherein the identity of the first user comprises at least one of: a code of the first user, a name of the first user, an identity of a network corresponding to the identity of the first user, an international mobile subscriber identity (IMSI), a globally unique temporary UE identity (GUTI), or a permanent equipment identifier (PEI).

46. The method according to claim 44 or 45, wherein after the first network device transmitting the fourth message, the method further comprises:
in response to that the terminal does not meet a valid service condition corresponding to the identity of the first user, performing, by the first network device, at least one operation of: stopping a portion or all of communication services corresponding to the identity of the first user; or transmitting a sixth message.

47. The method according to claim 46, wherein the valid service condition comprises at least one of: being within a valid period; or the terminal being located within a valid region.

48. The method according to claim 44 or 45, wherein after the first network device transmitting the fourth message, the method further comprises:
receiving, by the first network device, a fifth message, wherein the fifth message is used to determine at least one of: the valid service condition corresponding to the identity of the first user being not met, a temporary identity of the first user being to be allocated, a valid time being to be updated, or a valid region being to be updated; and
performing, by the first network device, at least one operation of: stopping a portion or all of communication services corresponding to the identity of the first user; or transmitting a sixth message.

49. The method according to claim 48, wherein the fifth message is carried in at least one of: a second uplink non-access stratum (NAS) message, or a second uplink container.

50. The method according to any one of claims 46 to 49, wherein the sixth message carries at least one of: a temporary identity of the first user, an updated valid time, or an updated valid region.

51. The method according to any one of claims 46 to 50, wherein the sixth message is carried in at least one of: a third downlink NAS message, or a third downlink container.

52. The method according to claim 47, wherein the valid time is pre-configured, and/or the valid region is pre-configured.

53. The method according to any one of claims 44 to 51, wherein the fourth message further carries at least one of: a valid time, or a valid region.

54. The method according to any one of claims 44 to 52, wherein the fourth message is carried in at least one of: a fourth downlink NAS message, or a fourth downlink container.

55. The method according to any one of claims 44 to 54, wherein the first network device comprises at least one of: an access and mobility management function (AMF), a unified data management (UDM), a unified data repository (UDR), or an identity management network element.

56. A terminal, comprising:
a first communication unit, configured to receive a first message, wherein the first message carries a temporary identity of a first user, and the first user is a user using the terminal.

57. The terminal according to claim 56, wherein the temporary identity of the first user comprises at least one of: an identity of a region corresponding to the temporary identity of the first user, a relevant identity of a network device corresponding to the temporary identity of the first user, an identity of a network corresponding to the temporary identity of the first user, a temporary mobile subscriber identity (TMSI), an international mobile subscriber identity (IMSI), a globally unique temporary UE identity (GUTI), or a permanent equipment identifier (PEI).

58. The terminal according to claim 56 or 57, wherein the temporary identity of the first user further comprises: a code of the first user, wherein the code of the first user is allocated by a network device serving the terminal.

59. The terminal according to claim 57, wherein the region corresponding to the temporary identity of the first user comprises at least one of: a region where the network device corresponding to the temporary identity of the first user is located; or a region where the temporary identity of the first user is valid.

60. The terminal according to claim 57, wherein the relevant identity of the network device corresponding to the temporary identity of the first user comprises at least one of: an identity of a set to which the network device corresponding to the temporary identity of the first user belongs; or an identity of the network device corresponding to the temporary identity of the first user.

61. The terminal according to any one of claims 56 to 60, wherein the first communication unit is configured to, in response to that the temporary identity of the first user does not meet a first valid condition, perform at least one operation of: stopping all or a portion of communication services corresponding to the temporary identity of the first user; or transmitting a second message, wherein the second message is used to determine at least one of: the temporary identity of the first user being invalid, a relevant identity of the first user being to be updated, or the temporary identity of the first user not meeting the first valid condition.

62. The terminal according to claim 61, wherein the first valid condition comprises at least one of: the temporary identity of the first user being within a valid time; the terminal being located within a valid region; the terminal being located within a region where the temporary identity of the first user is valid; or there being no other relevant identity that needs to be updated for the terminal.

63. The terminal according to any one of claims 56 to 62, wherein the first message further carries at least one of: a valid time, or a valid region.

64. The terminal according to claim 62, wherein the valid time is pre-configured, and/or the valid region is pre-configured.

65. The terminal according to claim 61 or 62, wherein the second message carries the temporary identity of the first user.

66. The terminal according to claim 61 or 62, wherein the second message is carried in at least one of: a first uplink non-access stratum (NAS) message, or a first uplink container.

67. The terminal according to any one of claims 56 to 66, wherein the first communication unit is configured to receive a third message, wherein the third message carries at least one of: an updated temporary identity of the first user, an updated valid time, an updated valid region, or an identity of the first user.

68. The terminal according to claim 67, wherein the identity of the first user comprises at least one of: a code of the first user, a name of the first user, an identity of a network corresponding to the identity of the first user, an IMSI, a GUTI, or a PEI.

69. The terminal according to claim 67 or 68, wherein the third message is carried in at least one of: a first downlink NAS message, or a first downlink container.

70. The terminal according to any one of claims 56 to 69, wherein the first message is carried in at least one of: a second downlink NAS message, or a second downlink container.

71. A first network device, comprising:
a second communication unit, configured to transmit a first message, wherein the first message carries a temporary identity of a first user, and the first user is a user using a terminal.

72. The first network device according to claim 71, wherein the temporary identity of the first user comprises at least one of: an identity of a region corresponding to the temporary identity of the first user, a relevant identity of a network device corresponding to the temporary identity of the first user, an identity of a network corresponding to the temporary identity of the first user, a temporary mobile subscriber identity (TMSI), an international mobile subscriber identity (IMSI), a globally unique temporary UE identity (GUTI), or a permanent equipment identifier (PEI).

73. The first network device according to claim 71 or 72, wherein the temporary identity of the first user further comprises: a code of the first user.

74. The first network device according to claim 72, wherein the region corresponding to the temporary identity of the first user comprises at least one of: a region where the network device corresponding to the temporary identity of the first user is located; or a region where the temporary identity of the first user is valid.

75. The first network device according to claim 72, wherein the relevant identity of the network device corresponding to the temporary identity of the first user comprises at least one of: an identity of a set to which the network device corresponding to the temporary identity of the first user belongs; or an identity of the network device corresponding to the temporary identity of the first user.

76. The first network device according to any one of claims 71 to 75, wherein the second communication unit is configured to, in response to that the temporary identity of the first user does not meet a second valid condition, perform at least one operation of: stopping a portion or all of communication services corresponding to the temporary identity of the first user; or transmitting a third message.

77. The first network device according to claim 76, wherein the second valid condition comprises at least one of: the temporary identity of the first user being within a valid time; the terminal being located within a valid region; or the terminal being located within the region where the temporary identity of the first user is used.

78. The first network device according to any one of claims 71 to 75, wherein the second communication unit is configured to receive a second message, wherein the second message is used to determine at least one of: the temporary identity of the first user being invalid, a relevant identity of the first user being to be updated, or the temporary identity of the first user not meeting a first valid condition; and perform at least one operation of: stopping a portion or all of communication services corresponding to the temporary identity of the first user; or transmitting a third message.

79. The first network device according to claim 78, wherein the second message carries the temporary identity of the first user.

80. The first network device according to claim 78 or 79, wherein the second message is carried in at least one of: a first uplink non-access stratum (NAS) message, or a first uplink container.

81. The first network device according to any one of claims 76 to 80, wherein the third message carries at least one of: an updated temporary identity of the first user, an updated valid time, an updated valid region, or an identity of the first user.

82. The first network device according to claim 81, wherein the identity of the first user comprises at least one of: a code of the first user, a name of the first user, an identity of a network corresponding to the identity of the first user, an IMSI, a GUTI, or a PEI.

83. The first network device according to any one of claims 76 to 81, wherein the third message is carried in at least one of: a first downlink NAS message, or a first downlink container.

84. The first network device according to claim 77, wherein the valid time is pre-configured, and/or the valid region is pre-configured.

85. The first network device according to any one of claims 71 to 83, wherein the first message further carries at least one of: a valid time, or a valid region.

86. The first network device according to any one of claims 71 to 85, wherein the first message is carried in at least one of: a second downlink NAS message, or a second downlink container.

87. The first network device according to any one of claims 71 to 86, wherein the first network device comprises at least one of: an access and mobility management function (AMF), a unified data management (UDM), a unified data repository (UDR), or an identity management network element.

88. A terminal, comprising:
a first communication unit, configured to receive a fourth message, wherein the fourth message carries an identity of a first user, and the first user is a user using the terminal.

89. The terminal according to claim 88, wherein the identity of the first user comprises at least one of: a code of the first user, a name of the first user, an identity of a network corresponding to the identity of the first user, an international mobile subscriber identity (IMSI), a globally unique temporary UE identity (GUTI), or a permanent equipment identifier (PEI).

90. The terminal according to claim 88 or 89, wherein the first communication unit is configured to, in response to that the terminal does not meet a valid service condition corresponding to the identity of the first user, perform at least one operation of: stopping a portion or all of communication services corresponding to the identity of the first user; or transmitting a fifth message, wherein the fifth message is used to determine at least one of: the valid service condition corresponding to the identity of the first user being not met, a temporary identity of the first user being to be allocated, a valid time being to be updated, or a valid region being to be updated.

91. The terminal according to claim 90, wherein the valid service condition comprises at least one of: being within the valid period; or the terminal being located within the valid region.

92. The terminal according to claim 90 or 91, wherein the fifth message is further used to determine to allocate the temporary identity of the first user.

93. The terminal according to any one of claims 90 to 92, wherein the fifth message is carried in at least one of: a second uplink non-access stratum (NAS) message, or a second uplink container.

94. The terminal according to claim 91, wherein the valid time is pre-configured, and/or the valid region is pre-configured.

95. The terminal according to any one of claims 88 to 93, wherein the fourth message further carries at least one of: a valid time, or a valid region.

96. The terminal according to any one of claims 88 to 95, wherein the first communication unit is configured to receive a sixth message, wherein the sixth message carries at least one of: a temporary identity of the first user, an updated valid time, or an updated valid region.

97. The terminal according to claim 96, wherein the sixth message is carried in at least one of: a third downlink NAS message, or a third downlink container.

98. The terminal according to any one of claims 88 to 97, wherein the fourth message is carried in at least one of: a fourth downlink NAS message, or a fourth downlink container.

99. A first network device, comprising:
a second communication unit, configured to transmit a fourth message, wherein the fourth message carries an identity of a first user, and the first user is a user using a terminal.

100. The first network device according to claim 99, wherein the identity of the first user comprises at least one of: a code of the first user, a name of the first user, an identity of a network corresponding to the identity of the first user, an international mobile subscriber identity (IMSI), a globally unique temporary UE identity (GUTI), or a permanent equipment identifier (PEI).

101. The first network device according to claim 99 or 100, wherein the second communication unit is configured to, in response to that the terminal does not meet a valid service condition corresponding to the identity of the first user, cause the first network device to perform at least one operation of: stopping a portion or all of communication services corresponding to the identity of the first user; or transmitting a sixth message.

102. The first network device according to claim 101, wherein the valid service condition comprises at least one of: being within a valid period; or the terminal being located within a valid region.

103. The first network device according to claim 99 or 100, wherein the second communication unit is configured to receive a fifth message, wherein the fifth message is used to determine at least one of: the valid service condition corresponding to the identity of the first user being not met, a temporary identity of the first user being to be allocated, a valid time being to be updated, or a valid region being to be updated; and perform at least one operation of: stopping a portion or all of communication services corresponding to the identity of the first user; or transmitting a sixth message.

104. The first network device according to claim 103, wherein the fifth message is carried in at least one of: a second uplink non-access stratum (NAS) message, or a second uplink container.

105. The first network device according to any one of claims 101 to 104, wherein the sixth message carries at least one of: a temporary identity of the first user, an updated valid time, or an updated valid region.

106. The first network device according to any one of claims 101 to 105, wherein the sixth message is carried in at least one of: a third downlink NAS message, or a third downlink container.

107. The first network device according to claim 47, wherein the valid time is pre-configured, and/or the valid region is pre-configured.

108. The first network device according to any one of claims 99 to 106, wherein the fourth message further carries at least one of: a valid time, or a valid region.

109. The first network device according to any one of claims 99 to 107, wherein the fourth message is carried in at least one of: a fourth downlink NAS message, or a fourth downlink container.

110. The first network device according to any one of claims 99 to 109, wherein the first network device comprises at least one of: an access and mobility management function (AMF), a unified data management (UDM), a unified data repository (UDR), or an identity management network element.

111. A terminal, comprising: a transceiver, a processor and a memory, wherein the memory is configured to store a computer program, the transceiver is configured to communicate with other devices, and the processor is configured to invoke and execute the computer program stored in the memory, so as to enable the terminal to perform the method according to any one of claims 1 to 15, or claims 33 to 43.

112. A first network device, comprising: a transceiver, a processor and a memory, wherein the memory is configured to store a computer program, the transceiver is configured to communicate with another device, and the processor is configured to invoke and execute the computer program stored in the memory, so as to enable the first network device to perform the method according to any one of claims 16 to 32, or claims 44 to 55.

113. A chip, comprising: a processor, configured to invoke and execute a computer program from a memory, so as to enable a device equipped with the chip to perform the method according to any one of claims 1 to 15, or claims 16 to 32, or claims 33 to 43, or claims 44 to 55.

114. A computer-readable storage medium for storing a computer program, wherein in response to that the computer program is executed by a device, the device is enabled to perform the method according to any one of claims 1 to 15, or claims 16 to 32, or claims 33 to 43, or claims 44 to 55.

115. A computer program product, comprising computer program instructions, wherein a computer is enabled to perform the method according to any one of claims 1 to 15, or claims 16 to 32, or claims 33 to 43, or claims 44 to 55 through the computer program instructions.

116. A computer program, wherein a computer is enabled to perform the method according to any one of claims 1 to 15, or claims 16 to 32, or claims 33 to 43, or claims 44 to 55 through the computer program.
